# EUROPEAN PATENT APPLICATION

(11) **EP 4 852 490 A1**
(43) Date of publication of application: **09.12.2026**
(21) Application number: 24923332.1
(22) Date of filing: 24.09.2024
(51) Int. Cl.: H04W 24/02

(54) **COMMUNICATION METHODS AND APPARATUSES, AND COMPUTER PROGRAM PRODUCT AND COMPUTER-READABLE STORAGE MEDIUM**

(30) Priority: 08.02.2024 CN 202410178198
(71) Applicant: HUAWEI TECHNOLOGIES CO., LTD., Shenzhen, Guangdong 518129 (CN)
(72) Inventor: WANG, Jun, Shenzhen, Guangdong 518129 (CN); PENG, Chenghui, Shenzhen, Guangdong 518129 (CN); ZHANG, Kuan, Shenzhen, Guangdong 518129 (CN)
(74) Representative: Körber, Martin Hans
(86) International application number: PCT/CN2024/120875
(87) International publication number: WO 2025/167127

(57) **Abstract**

A communication method and apparatus, a computer program product, and a computer-readable storage medium are disclosed, relating to the field of communication technologies. A new network device architecture is introduced to more flexibly support services and improve communication performance. The method includes: A first functional unit on a network side obtains configuration information of a plurality of second functional units on the network side, and establishes a communication connection to a terminal device based on the configuration information of the plurality of second functional units. The first functional unit is configured to provide a connection interface for communicating with the terminal device, and the second functional unit is configured to provide a function or information associated with a transceiver function of the connection interface.

## Description

This application claims priority to Chinese Patent Application No. 202410178198.6, filed with the China National Intellectual Property Administration on February 8, 2024 and entitled "COMMUNICATION METHOD AND APPARATUS, COMPUTER PROGRAM PRODUCT, AND COMPUTER-READABLE STORAGE MEDIUM", which is incorporated herein by reference in its entirety.

### TECHNICAL FIELD

This application relates to the field of communication technologies, and in particular, to a communication method and apparatus, a computer program product, and a computer-readable storage medium.

### BACKGROUND

With the continuous development of communication systems, from the 2nd generation (2nd-generation, 2G) communication system to the 5G communication system, radio access network (radio access network, RAN) architectures have been continuously designed and evolved based on connection characteristics. For example, the 2G communication system supports a two-level RAN architecture including a base station controller (base station controller, BSC) and a base transceiver station (base transceiver station, BTS). The 3G communication system supports a two-level architecture including a radio network controller (radio network controller, RNC) and a NodeB (NodeB). To support a flattened architecture, the 4G communication system is evolved into a one-level architecture including an evolved NodeB (eNodeB, eNB). To enable flexible deployment, the 5G communication system is further evolved to support both a one-level architecture including a next-generation base station (gNodeB, gNB) and a two-level architecture including a central unit (central unit, CU) and a distributed unit (distributed unit, DU). In addition, the 5G communication system supports decoupling of the control plane (control plane, CP) and user plane (user plane, UP) of the CU, resulting in CU-CP and CU-UP designs.

The RAN architectures from the 2G communication system to the 5G communication system have been designed based on connection services, with no fundamental changes in architectural principles. However, with the continuous emergence of new services (such as sensing and artificial intelligence (artificial intelligence, AI)), the design of the RAN architecture lacks sufficient flexibility. There is room for further optimization to more flexibly support new services and improve communication performance.

### SUMMARY

This application provides a communication method and apparatus, a computer program product, and a computer-readable storage medium. A new network device architecture is introduced to more flexibly support services and improve communication performance.

According to a first aspect, this application provides a communication method. The method may be performed by a first functional unit on a network side. Unless otherwise specified, the "first functional unit on a network side" in this application may be the first functional unit on the network side, or may be a component (for example, a processor, a chip, or a chip system) in the first functional unit on the network side, or may be a logic module or software that can implement all or a part of functions of the first functional unit on the network side. The method includes: obtaining configuration information of a plurality of second functional units on the network side, and establishing a communication connection to a terminal device based on the configuration information of the plurality of second functional units. The first functional unit is configured to provide a connection interface for communicating with the terminal device. The second functional unit is configured to provide a function or information associated with a transceiver function of the connection interface.

According to the first aspect, a new network device architecture is provided. To be specific, a modular design may be used to split a network device into the first functional unit and the plurality of second functional units. The plurality of second functional units can more flexibly support various types of services, thereby improving communication performance.

In a possible design, the second functional unit is configured to provide one or more of the following functions: a computing function, a data function, an intelligence function, a sensing function, a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

According to a second aspect, this application provides a communication method. The method may be performed by a first functional unit on a network side. Unless otherwise specified, the "first functional unit on a network side" in this application may be the first functional unit on the network side, or may be a component (for example, a processor, a chip, or a chip system) in the first functional unit on the network side, or may be a logic module or software that can implement all or a part of functions of the first functional unit on the network side. The method includes: obtaining configuration information of one or more second functional units on the network side, and sending the configuration information of the second functional unit to a terminal device. The first functional unit is configured to provide a connection function. The second functional unit is configured to provide a first service function. The first service function includes one or more of the following: a computing function, a data function, an intelligence function, or a sensing function.

In a possible design, the second functional unit is further configured to provide one or more of the following functions: a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

With reference to the first aspect or the second aspect, in a possible design, obtaining the configuration information of the second functional unit includes: receiving first air interface information from the second functional unit, where the first air interface information includes the configuration information of the second functional unit.

With reference to the first aspect or the second aspect, in a possible design, the method further includes: sending the first air interface information to the terminal device.

With reference to the first aspect or the second aspect, in a possible design, the method further includes: receiving first information from the terminal device, where the first information includes first indication information and second air interface information, and the first indication information indicates the first functional unit to send the second air interface information to the second functional unit; and sending the second air interface information to the second functional unit based on the first indication information.

With reference to the first aspect or the second aspect, in a possible design, the first indication information includes one or more of the following: type/capability identification information of the second functional unit, identification information of the second functional unit, identification information of the terminal device, and task identification information.

With reference to the first aspect or the second aspect, in a possible design, obtaining the configuration information of the second functional unit includes: receiving first inter-station interface information from the second functional unit, where the first inter-station interface information includes the configuration information of the second functional unit.

With reference to the first aspect or the second aspect, in a possible design, the method further includes: determining third air interface information based on the first inter-station interface information, where the third air interface information includes the configuration information of the second functional unit; and sending the third air interface information to the terminal device.

With reference to the first aspect or the second aspect, in a possible design, the method further includes: receiving fourth air interface information from the terminal device, encapsulating the fourth air interface information into second inter-station interface information, and sending the second inter-station interface information to the second functional unit.

With reference to the first aspect or the second aspect, in a possible design, the fourth air interface information includes one or more of the following: type/capability identification information of the second functional unit, identification information of the terminal device, and task identification information.

With reference to the first aspect or the second aspect, in a possible design, the method further includes: determining, based on one or more of the following, a second functional unit corresponding to the terminal device: the type/capability identification information of the second functional unit, the identification information of the second functional unit, the identification information of the terminal device, and the task identification information.

With reference to the first aspect or the second aspect, in a possible design, the method further includes: receiving a first request from the second functional unit, where the first request is for requesting to establish an air interface bearer between the second functional unit and the terminal device; and sending the first request to the terminal device.

With reference to the first aspect or the second aspect, in a possible design, the method further includes: sending a second request to the terminal device, where the second request is for requesting to establish an air interface bearer between the first functional unit and the terminal device.

With reference to the first aspect or the second aspect, in a possible design, the method further includes: receiving a third request from the second functional unit, where the third request is for requesting to establish a terrestrial tunnel between the first functional unit and the second functional unit; or sending a fourth request to the second functional unit, where the fourth request is for requesting to establish a terrestrial tunnel between the first functional unit and the second functional unit.

With reference to the first aspect or the second aspect, in a possible design, the third request includes the identification information of the terminal device and/or the task identification information; or the fourth request includes the identification information of the terminal device and/or the task identification information.

With reference to the first aspect or the second aspect, in a possible design, the method further includes: receiving a fifth request from the second functional unit, where the fifth request is for requesting to obtain identification information of a functional unit corresponding to the terminal device and/or identification information of a functional unit corresponding to a task, and the fifth request includes the identification information of the terminal device and/or the task identification information; and sending a fifth response to the second functional unit, where the fifth response includes the identification information of the functional unit corresponding to the terminal device and/or the identification information of the functional unit corresponding to the task.

With reference to the first aspect or the second aspect, in a possible design, the method further includes: receiving a sixth request from the second functional unit, where the sixth request is for requesting to obtain connection information of the terminal device, and the sixth request includes the identification information of the terminal device; and sending a sixth response to the second functional unit, where the sixth response includes the connection information of the terminal device.

With reference to the first aspect or the second aspect, in a possible design, the method further includes: sending a seventh request to the second functional unit, where the seventh request is for requesting to obtain context information of the terminal device, and the seventh request includes the identification information of the terminal device; receiving the context information of the terminal device from the second functional unit; sending a handover request to a target first functional unit, where the handover request includes the context information of the terminal device; receiving a handover response from the target first functional unit, where the handover response includes configuration information of a target second functional unit; and sending a handover command to the terminal device based on the handover response, where the handover command includes the configuration information of the target second functional unit.

With reference to the first aspect or the second aspect, in a possible design, the method further includes: sending the configuration information of the target second functional unit to the second functional unit.

With reference to the first aspect or the second aspect, in a possible design, the method further includes: receiving service data of the terminal device from the second functional unit; and sending the service data of the terminal device to the target first functional unit.

With reference to the first aspect or the second aspect, in a possible design, the method further includes: sending a seventh request to the second functional unit, where the seventh request is for requesting to obtain context information of the terminal device, and the seventh request includes the identification information of the terminal device; receiving the context information of the terminal device from the second functional unit; sending a handover request to a target network device, where the handover request includes the context information of the terminal device; receiving a handover response from the target network device, where the handover response includes configuration information of the target network device; and sending a handover command to the terminal device based on the handover response, where the handover command includes the configuration information of the target network device.

With reference to the first aspect or the second aspect, in a possible design, the method further includes: sending the configuration information of the target network device to the second functional unit.

With reference to the first aspect or the second aspect, in a possible design, the method further includes: receiving service data of the terminal device from the second functional unit; and sending the service data of the terminal device to the target network device.

With reference to the first aspect or the second aspect, in a possible design, the context information of the terminal device includes context information of the terminal device in the first functional unit and context information of the terminal device in the second functional unit.

With reference to the first aspect or the second aspect, in a possible design, the method further includes: receiving a handover request from a source first functional unit, where the handover request includes the context information of the terminal device; and sending a handover response to the source first functional unit, where the handover response includes the configuration information of the second functional unit.

With reference to the first aspect or the second aspect, in a possible design, the context information of the terminal device includes context information of the terminal device in the source first functional unit and context information of the terminal device in a source second functional unit.

With reference to the first aspect or the second aspect, in a possible design, the method further includes: sending the context information of the terminal device in the source second functional unit to the second functional unit.

With reference to the first aspect or the second aspect, in a possible design, the method further includes: receiving service data of the terminal device from the source first functional unit; and sending the service data of the terminal device to the second functional unit.

With reference to the first aspect or the second aspect, in a possible design, the method further includes: receiving a handover request from a source network device, where the handover request includes the context information of the terminal device; and sending a handover response to the source network device, where the handover response includes the configuration information of the second functional unit.

With reference to the first aspect or the second aspect, in a possible design, the method further includes: sending the context information of the terminal device to the second functional unit.

With reference to the first aspect or the second aspect, in a possible design, the method further includes: receiving service data of the terminal device from the source network device; and sending the service data of the terminal device to the second functional unit.

With reference to the first aspect or the second aspect, in a possible design, the method further includes: receiving a context obtaining request from a new first functional unit, where the context obtaining request includes the identification information of the terminal device; sending a seventh request to the second functional unit, where the seventh request is for requesting to obtain the context information of the terminal device, and the seventh request includes the identification information of the terminal device; receiving context information of the terminal device from the second functional unit; and sending the context information of the terminal device to the new first functional unit.

With reference to the first aspect or the second aspect, in a possible design, the method further includes: receiving a context obtaining request from the first network device, where the context obtaining request includes the identification information of the terminal device; sending a seventh request to the second functional unit, where the seventh request is for requesting to obtain the context information of the terminal device, and the seventh request includes the identification information of the terminal device; receiving context information of the terminal device from the second functional unit; and sending the context information of the terminal device to the first network device.

With reference to the first aspect or the second aspect, in a possible design, the context information of the terminal device includes context information of the terminal device in the first functional unit and context information of the terminal device in the second functional unit.

With reference to the first aspect or the second aspect, in a possible design, the method further includes: receiving an eighth request from the terminal device, where the eighth request is for requesting to enter a connected state; sending a context obtaining request to an old first functional unit based on the eighth request, where the context obtaining request includes the identification information of the terminal device; receiving context information of the terminal device from the old first functional unit; and sending the configuration information of the second functional unit to the terminal device.

With reference to the first aspect or the second aspect, in a possible design, the context information of the terminal device includes the context information of the terminal device in the old first functional unit and context information of the terminal device in an old second functional unit.

With reference to the first aspect or the second aspect, in a possible design, the method further includes: sending the context information of the terminal device in the old second functional unit to the second functional unit.

With reference to the first aspect or the second aspect, in a possible design, the method further includes: receiving an eighth request from the terminal device, where the eighth request is for requesting to enter a connected state; sending a context obtaining request to a second network device based on the eighth request, where the context obtaining request includes the identification information of the terminal device; receiving context information of the terminal device from the second network device; and sending the configuration information of the second functional unit to the terminal device.

With reference to the first aspect or the second aspect, in a possible design, the method further includes: sending the context information of the terminal device to the second functional unit.

With reference to the first aspect or the second aspect, in a possible design, the method further includes: when the terminal device enters an idle state, sending second indication information to the second functional unit, where the second indication information indicates to release the context information of the terminal device; or when the terminal device enters an inactive state, sending third indication information to the second functional unit, where the third indication information indicates to suspend the context information of the terminal device; or when the terminal device enters a connected state, sending fourth indication information to the second functional unit, where the fourth indication information indicates to resume the context information of the terminal device; or when a radio link failure/cell handover failure/cell reestablishment failure occurs on the terminal device, sending second indication information to the second functional unit, where the second indication information indicates to release the context information of the terminal device.

According to a third aspect, this application provides a communication method. The method may be performed by a second functional unit on a network side. Unless otherwise specified, the "second functional unit on a network side" in this application may be the second functional unit on the network side, or may be a component (for example, a processor, a chip, or a chip system) in the second functional unit on the network side, or may be a logic module or software that can implement all or a part of functions of the second functional unit on the network side. The method includes: generating configuration information of the second functional unit; and sending the configuration information of the second functional unit to a first functional unit on the network side, where the first functional unit is configured to provide a connection interface for communicating with a terminal device, and the second functional unit is configured to provide a function or information associated with a transceiver function of the connection interface.

In a possible design, the second functional unit is configured to provide one or more of the following functions: a computing function, a data function, an intelligence function, a sensing function, a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

According to a fourth aspect, this application provides a communication method. The method may be performed by a second functional unit on a network side. Unless otherwise specified, the "second functional unit on a network side" in this application may be the second functional unit on the network side, or may be a component (for example, a processor, a chip, or a chip system) in the second functional unit on the network side, or may be a logic module or software that can implement all or a part of functions of the second functional unit on the network side. The method includes: generating configuration information of the second functional unit; and sending the configuration information of the second functional unit to a first functional unit on the network side, where the first functional unit is configured to provide a connection function, the second functional unit is configured to provide a first service function, and the first service function includes one or more of the following: a computing function, a data function, an intelligence function, or a sensing function.

In a possible design, the second functional unit is further configured to provide one or more of the following functions: a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

With reference to the third aspect or the fourth aspect, in a possible design, sending the configuration information of the second functional unit to the first functional unit on the network side includes: sending first air interface information to the first functional unit, where the first air interface information includes the configuration information of the second functional unit.

With reference to the third aspect or the fourth aspect, in a possible design, the method further includes: receiving second air interface information from the first functional unit, where the second air interface information is air interface information determined by a terminal device.

With reference to the third aspect or the fourth aspect, in a possible design, sending the configuration information of the second functional unit to the first functional unit on the network side includes: sending first inter-station interface information to the first functional unit, where the first inter-station interface information includes the configuration information of the second functional unit.

With reference to the third aspect or the fourth aspect, in a possible design, the method further includes: receiving second inter-station interface information from the first functional unit, where the second inter-station interface information is determined based on fourth air interface information of the terminal device.

With reference to the third aspect or the fourth aspect, in a possible design, the method further includes: sending a first request to the first functional unit, where the first request is for requesting to establish an air interface bearer between the second functional unit and the terminal device.

With reference to the third aspect or the fourth aspect, in a possible design, the method further includes: sending a third request to the first functional unit, where the third request is for requesting to establish a terrestrial tunnel between the first functional unit and the second functional unit; or receiving a fourth request from the first functional unit, where the fourth request is for requesting to establish a terrestrial tunnel between the first functional unit and the second functional unit.

With reference to the third aspect or the fourth aspect, in a possible design, the third request includes identification information of the terminal device and/or task identification information; or the fourth request includes identification information of the terminal device and/or task identification information.

With reference to the third aspect or the fourth aspect, in a possible design, the method further includes: sending a fifth request to the first functional unit, where the fifth request is for requesting to obtain identification information of a functional unit corresponding to the terminal device and/or identification information of a functional unit corresponding to a task, and the fifth request includes the identification information of the terminal device and/or the task identification information; and receiving a fifth response from the first functional unit, where the fifth response includes the identification information of the functional unit corresponding to the terminal device and/or the identification information of the functional unit corresponding to the task.

With reference to the third aspect or the fourth aspect, in a possible design, the method further includes: sending, based on the fifth response, a ninth request to the functional unit corresponding to the terminal device and/or the functional unit corresponding to the task, where the ninth request is for requesting to obtain function information of the terminal device and/or function information of the task, and the ninth request includes the identification information of the terminal device and/or the task identification information; and receiving a ninth response from the functional unit, where the ninth response includes the function information of the terminal device and/or the function information of the task.

With reference to the third aspect or the fourth aspect, in a possible design, the method further includes: sending a sixth request to the first functional unit, where the sixth request is for requesting to obtain connection information of the terminal device, and the sixth request includes the identification information of the terminal device; and receiving a sixth response from the first functional unit, where the sixth response includes the connection information of the terminal device.

With reference to the third aspect or the fourth aspect, in a possible design, the method further includes: receiving a seventh request from the first functional unit, where the seventh request is for requesting to obtain context information of the terminal device, and the seventh request includes the identification information of the terminal device; and sending the context information of the terminal device to the first functional unit.

With reference to the third aspect or the fourth aspect, in a possible design, the method further includes: receiving, from the first functional unit, configuration information of a target second functional unit.

With reference to the third aspect or the fourth aspect, in a possible design, the method further includes: sending service data of the terminal device to the target second functional unit.

With reference to the third aspect or the fourth aspect, in a possible design, the method further includes: receiving configuration information of a target network device from the first functional unit.

With reference to the third aspect or the fourth aspect, in a possible design, the method further includes: sending the service data of the terminal device to the target network device.

With reference to the third aspect or the fourth aspect, in a possible design, the method further includes: sending the service data of the terminal device to the first functional unit.

With reference to the third aspect or the fourth aspect, in a possible design, the method further includes: receiving context information of the terminal device in a source second functional unit from the first functional unit.

With reference to the third aspect or the fourth aspect, in a possible design, the method further includes: receiving service data of the terminal device from the first functional unit; or receiving service data of the terminal device from the source second functional unit.

With reference to the third aspect or the fourth aspect, in a possible design, the method further includes: receiving context information of the terminal device in a source network device from the first functional unit.

With reference to the third aspect or the fourth aspect, in a possible design, the method further includes: receiving the service data of the terminal device from the first functional unit; or receiving service data of the terminal device from the source network device.

With reference to the third aspect or the fourth aspect, in a possible design, the method further includes: receiving a seventh request from the first functional unit, where the seventh request is for requesting to obtain context information of the terminal device, and the seventh request includes the identification information of the terminal device; and sending the context information of the terminal device to the first functional unit.

With reference to the third aspect or the fourth aspect, in a possible design, the method further includes: receiving context information of the terminal device in an old second functional unit from the first functional unit; or receiving context information of the terminal device in the second network device from the first functional unit.

With reference to the third aspect or the fourth aspect, in a possible design, the method further includes: when the terminal device enters an idle state, receiving second indication information from the first functional unit, where the second indication information indicates to release the context information of the terminal device; or when the terminal device enters an inactive state, receiving third indication information sent from the first functional unit, where the third indication information indicates to suspend the context information of the terminal device; or when the terminal device enters a connected state, receiving fourth indication information from the first functional unit, where the fourth indication information indicates to resume the context information of the terminal device; or when a radio link failure/cell handover failure/cell reestablishment failure occurs on the terminal device, receiving second indication information from the first functional unit, where the second indication information indicates to release the context information of the terminal device.

According to a fifth aspect, this application provides a communication method. The method may be performed by a terminal device. Unless otherwise specified, the "terminal device" in this application may be the terminal device, or may be a component (for example, a processor, a chip, or a chip system) in the terminal device, or may be a logic module or software that can implement all or a part of functions of the terminal device. The method includes: obtaining a plurality of pieces of configuration information of a plurality of second functional units on a network side; and establishing a communication connection to a first functional unit on the network side based on the configuration information of the second functional unit, where the first functional unit is configured to provide a connection interface for communicating with the terminal device, and the second functional unit is configured to provide a function or information associated with a transceiver function of the connection interface.

In a possible design, the second functional unit is configured to provide one or more of the following functions: a computing function, a data function, an intelligence function, a sensing function, a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

According to a sixth aspect, this application provides a communication method. The method may be performed by a terminal device. Unless otherwise specified, the "terminal device" in this application may be the terminal device, or may be a component (for example, a processor, a chip, or a chip system) in the terminal device, or may be a logic module or software that can implement all or a part of functions of the terminal device. The method includes: obtaining configuration information of a second functional unit on a network side, and establishing a communication connection to a first functional unit on the network side based on the configuration information of the second functional unit. The first functional unit is configured to provide a connection function. The second functional unit is configured to provide a first service function. The first service function includes one or more of the following: a computing function, a data function, an intelligence function, or a sensing function.

In a possible design, the second functional unit is further configured to provide one or more of the following functions: a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

With reference to the fifth aspect or the sixth aspect, in a possible design, obtaining the configuration information of the second functional unit includes: receiving first air interface information from the first functional unit, where the first air interface information includes the configuration information of the second functional unit.

With reference to the fifth aspect or the sixth aspect, in a possible design, the method further includes: sending first information to the first functional unit, where the first information includes first indication information and second air interface information, and the first indication information indicates the first functional unit to send the second air interface information to the second functional unit.

With reference to the fifth aspect or the sixth aspect, in a possible design, the first indication information includes one or more of the following: type/capability identification information of the second functional unit, identification information of the second functional unit, identification information of the terminal device, and task identification information.

With reference to the fifth aspect or the sixth aspect, in a possible design, obtaining the configuration information of the second functional unit includes: receiving third air interface information from the first functional unit, where the third air interface information includes the configuration information of the second functional unit, and the third air interface information is determined based on first inter-station interface information of the second functional unit.

With reference to the fifth aspect or the sixth aspect, in a possible design, the method further includes: sending fourth air interface information to the first functional unit, where the fourth air interface information includes one or more of the following: type/capability identification information of the second functional unit, identification information of the terminal device, and task identification information.

With reference to the fifth aspect or the sixth aspect, in a possible design, the method further includes: receiving a first request from the first functional unit, where the first request is for requesting to establish an air interface bearer between the second functional unit and the terminal device.

With reference to the fifth aspect or the sixth aspect, in a possible design, the method further includes: receiving a second request from the first functional unit, where the second request is for requesting to establish an air interface bearer between the first functional unit and the terminal device.

With reference to the fifth aspect or the sixth aspect, in a possible design, the method further includes: receiving a handover command from the first functional unit, where the handover command includes configuration information of a target second functional unit, or the handover command includes configuration information of a target network device; and performing handover to the target network device based on the handover command.

With reference to the fifth aspect or the sixth aspect, in a possible design, the method further includes: sending an eighth request to the first functional unit, where the eighth request is for requesting to enter a connected state; and receiving the configuration information of the second functional unit from the first functional unit.

According to a seventh aspect, this application provides a communication apparatus. The communication apparatus may be used in the first functional unit on the network side in the first aspect or the second aspect, to implement functions performed by the first functional unit on the network side. The communication apparatus may be the first functional unit on the network side, or may be a chip, a chip system, a system on chip, or the like in the first functional unit on the network side. The communication apparatus may be implemented by hardware performing functions performed by the first functional unit on the network side or by hardware executing corresponding software. The hardware or the software includes one or more modules corresponding to the foregoing functions, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to obtain configuration information of a plurality of second functional units on the network side; and the processing module is configured to establish a communication connection to a terminal device based on the configuration information of the plurality of second functional units. The first functional unit is configured to provide a connection interface for communicating with the terminal device. The second functional unit is configured to provide a function or information associated with a transceiver function of the connection interface.

In another example, the transceiver module is configured to: obtain configuration information of one or more second functional units on the network side, and send the configuration information of the second functional unit to a terminal device. The first functional unit is configured to provide a connection function. The second functional unit is configured to provide a first service function. The first service function includes one or more of the following: a computing function, a data function, an intelligence function, or a sensing function.

Optionally, the transceiver module and the processing module of the communication apparatus in the seventh aspect may further perform corresponding functions in any one of the first aspect or the possible designs of the first aspect, or perform corresponding functions in any one of the second aspect or the possible designs of the second aspect. For details, refer to the detailed descriptions in the method examples. For beneficial effect that can be achieved, refer to the foregoing related content.

According to an eighth aspect, this application provides a communication apparatus. The communication apparatus may be used in the second functional unit on the network side in the third aspect or the fourth aspect, to implement functions performed by the second functional unit on the network side. The communication apparatus may be the second functional unit on the network side, or may be a chip, a chip system, a system on chip, or the like in the second functional unit on the network side. The communication apparatus may be implemented by hardware performing functions performed by the second functional unit on the network side or by hardware executing corresponding software. The hardware or the software includes one or more modules corresponding to the foregoing functions, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the processing module is configured to generate configuration information of the second functional unit; and the transceiver module is configured to send the configuration information of the second functional unit to a first functional unit on the network side, where the first functional unit is configured to provide a connection interface for communicating with a terminal device, and the second functional unit is configured to provide a function or information associated with a transceiver function of the connection interface.

In another example, the processing module is configured to generate configuration information of the second functional unit; and the transceiver module is configured to send the configuration information of the second functional unit to a first functional unit on the network side, where the first functional unit is configured to provide a connection function, the second functional unit is configured to provide a first service function, and the first service function includes one or more of the following: a computing function, a data function, an intelligence function, or a sensing function.

Optionally, the transceiver module and the processing module of the communication apparatus in the eighth aspect may further perform corresponding functions in any one of the third aspect or the possible designs of the third aspect, or perform corresponding functions in any one of the fourth aspect or the possible designs of the fourth aspect. For details, refer to the detailed descriptions in the method examples. For beneficial effect that can be achieved, refer to the foregoing related content.

According to a ninth aspect, this application provides a communication apparatus. The communication apparatus may be used in the terminal device in the fifth aspect or the sixth aspect, to implement functions performed by the terminal device. The communication apparatus may be the terminal device, or may be a chip, a chip system, a system on chip, or the like in the terminal device. The communication apparatus may be implemented by hardware performing functions performed by the terminal device or by hardware executing corresponding software. The hardware or the software includes one or more modules corresponding to the foregoing functions, for example, a transceiver module and a processing module. The transceiver module may independently complete the following sending and receiving operations, or may cooperate with the processing module to complete the following sending and receiving operations. Correspondingly, the processing module may independently complete the following processing operation, or may cooperate with the transceiver module to complete the following processing operation. This is not limited.

For example, the transceiver module is configured to obtain a plurality of pieces of configuration information of a plurality of second functional units on a network side; and the processing module is configured to establish a communication connection to a first functional unit on the network side based on the configuration information of the second functional unit, where the first functional unit is configured to provide a connection interface for communicating with the terminal device, and the second functional unit is configured to provide a function or information associated with a transceiver function of the connection interface.

In another example, the transceiver module is configured to obtain configuration information of a second functional unit on a network side; and the processing module is configured to establish a communication connection to a first functional unit on the network side based on the configuration information of the second functional unit. The first functional unit is configured to provide a connection function. The second functional unit is configured to provide a first service function. The first service function includes one or more of the following: a computing function, a data function, an intelligence function, or a sensing function.

Optionally, the transceiver module and the processing module of the communication apparatus in the ninth aspect may further perform corresponding functions in any one of the fifth aspect or the possible designs of the fifth aspect, or perform corresponding functions in any one of the sixth aspect or the possible designs of the sixth aspect. For details, refer to the detailed descriptions in the method examples. For beneficial effect that can be achieved, refer to the foregoing related content.

According to a tenth aspect, this application provides a communication apparatus. The communication apparatus includes one or more processors. The one or more processors are configured to run a computer program or instructions. When the one or more processors execute the computer instructions or the instructions, the communication method in any one of the first aspect to the sixth aspect is performed.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this application, the processor and the memory may alternatively be integrated into one device, that is, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to an eleventh aspect, this application provides a communication apparatus. The communication apparatus includes an interface circuit and a logic circuit. The interface circuit is configured to input and/or output information. The logic circuit is configured to: perform the communication method in any one of the first aspect to the sixth aspect, to perform processing based on the information and/or generate the information.

According to a twelfth aspect, this application provides a computer-readable storage medium. The computer-readable storage medium stores computer instructions or a program. When the computer instructions or the program is run on a computer, the communication method in any one of the first aspect to the sixth aspect is performed.

According to a thirteenth aspect, this application provides a computer program product including computer instructions. When the computer program product runs on a computer, the communication method in any one of the first aspect to the sixth aspect is performed.

According to a fourteenth aspect, this application provides a computer program. When the computer program is run on a computer, the communication method in any one of the first aspect to the sixth aspect is performed.

According to a fifteenth aspect, this application provides a chip, including a processor. The processor is coupled to a memory, and the memory is configured to store a program or instructions. When the program or the instructions are executed by the processor, the communication method in any one of the first aspect to the sixth aspect is performed.

For technical effect brought by any design of the tenth aspect to the fifteenth aspect, refer to the technical effect brought by any one of the first aspect to the sixth aspect. Details are not described again.

According to a sixteenth aspect, this application provides a communication system. The communication system may include a communication apparatus configured to perform any one of the first aspect or the possible designs of the first aspect, a communication apparatus configured to perform any one of the third aspect or the possible designs of the third aspect, and a communication apparatus configured to perform any one of the fifth aspect or the possible designs of the fifth aspect. Alternatively, the communication system includes a communication apparatus configured to perform any one of the second aspect or the possible designs of the second aspect, a communication apparatus configured to perform any one of the fourth aspect or the possible designs of the fourth aspect, and a communication apparatus configured to perform any one of the sixth aspect or the possible designs of the sixth aspect.

### BRIEF DESCRIPTION OF DRAWINGS

FIG. 1 is a diagram of a communication system according to an embodiment of this application;
FIG. 2 is a diagram of signal transmission according to an embodiment of this application;
FIG. 3 is a diagram of a user plane protocol stack and a control plane protocol stack according to an embodiment of this application;
FIG. 4A and FIG. 4B are a diagram of a communication system according to an embodiment of this application;
FIG. 5 is a diagram of a communication system according to an embodiment of this application;
FIG. 6 is a diagram of a communication method according to an embodiment of this application;
FIG. 7 is a diagram of a communication system according to an embodiment of this application;
FIG. 8 is a diagram of a communication method according to an embodiment of this application;
FIG. 9 is a diagram of a communication method according to an embodiment of this application;
FIG. 10 is a diagram of a communication method according to an embodiment of this application;
FIG. 11 is a diagram of a communication system according to an embodiment of this application;
FIG. 12 is a diagram of a communication system according to an embodiment of this application;
FIG. 13 is a diagram of a communication system according to an embodiment of this application;
FIG. 14 is a diagram of a communication method according to an embodiment of this application;
FIG. 15 is a diagram of a communication method according to an embodiment of this application;
FIG. 16 is a diagram of a communication method according to an embodiment of this application;
FIG. 17 is a diagram of a communication method according to an embodiment of this application;
FIG. 18 is a diagram of a communication method according to an embodiment of this application;
FIG. 19 is a diagram of a communication method according to an embodiment of this application;
FIG. 20 is a diagram of a communication method according to an embodiment of this application;
FIG. 21 is a diagram of a communication method according to an embodiment of this application;
FIG. 22 is a diagram of a communication method according to an embodiment of this application;
FIG. 23 is a diagram of a communication method according to an embodiment of this application;
FIG. 24 is a diagram of a communication method according to an embodiment of this application;
FIG. 25 is a diagram of a communication method according to an embodiment of this application;
FIG. 26 is a diagram of a communication apparatus according to an embodiment of this application;
FIG. 27 is a diagram of a communication apparatus according to an embodiment of this application; and
FIG. 28 is a diagram of a communication apparatus according to an embodiment of this application.

### DESCRIPTION OF EMBODIMENTS

Before embodiments of this application are described, technical terms used in embodiments of this application are described.

A wireless communication system may include a radio access network (radio access network, RAN) domain, a core network (core network, CN) domain, and an operation, administration, and maintenance (operation, administration, and maintenance, OAM) domain. Service domains are mainly concentrated in the RAN domain and the CN domain. The RAN domain includes a terminal device and a network device. In a 5th generation (5th generation, 5G) mobile communication system, the CN domain is reconstructed, and control plane network functions such as an access and mobility management function (access and mobility management function, AMF), a session management function (session management function, SMF), a policy control function (policy control function, PCF), and a network repository function (network repository function, NRF), and user plane network functions such as a user plane function (user plane function, UPF) are defined.

Compared with a 4th generation (4th-generation, 4G) communication system that supports an enhanced mobile broadband (enhanced mobile broadband, eMBB) service, the 5G system can support the eMBB service and services such as an ultra-reliable low-latency communication (ultra-reliable low-latency communication, URLLC) service and a massive machine type communication (massive machine type communication, mMTC) service. However, regardless of a service type, a core objective is to transmit service data of the terminal device to an application server (application server, APP server) or a terminal device side (for example, voice data) at the other end. To support a service data routing function, the communication system further needs to support control signaling to complete control plane signaling functions such as initial access, authentication, security encryption, mobility, and tunnel establishment of the terminal device. The RAN domain and the CN domain need to coordinate to support end-to-end (end to end, E2E) signaling and data transmission.

With the continuous development of communication systems, from the 2nd generation (2nd-generation, 2G) communication system to the 5G communication system, RAN architectures have been continuously designed and evolved based on connection characteristics. For example, the 2G communication system supports a two-level RAN architecture including a base station controller (base station controller, BSC) and a base transceiver station (base transceiver station, BTS). The 3G communication system supports a two-level architecture including a radio network controller (radio network controller, RNC) and a NodeB (NodeB). To support a flattened architecture, the 4G communication system is evolved into a one-level architecture including an evolved NodeB (eNodeB, eNB). To enable flexible deployment, the 5G communication system is further evolved to support both a one-level architecture including a next-generation base station (gNodeB, gNB) and a two-level architecture including a central unit (central unit, CU) and a distributed unit (distributed unit, DU). In addition, the 5G communication system supports decoupling of the control plane (control plane, CP) and user plane (user plane, UP) of the CU, resulting in CU-CP and CU-UP designs.

The RAN architectures from the 2G communication system to the 5G communication system have been designed based on connection services, with no fundamental changes in architectural principles. However, with the continuous emergence of new services (such as sensing and artificial intelligence (artificial intelligence, AI)), the design of the RAN architecture lacks sufficient flexibility. There is room for further optimization to more flexibly support new services and improve communication performance.

To resolve the foregoing technical problem, an embodiment of this application provides a communication method. In the method, a first functional unit on a network side obtains configuration information of a plurality of second functional units on the network side, and establishes a communication connection to a terminal device based on the configuration information of the plurality of second functional units. The first functional unit is configured to provide a connection interface for communicating with the terminal device. The second functional unit is configured to provide a function or information associated with a transceiver function of the connection interface.

An embodiment of this application provides a new network device architecture. To be specific, a modular design may be used to split a network device into a first functional unit and a plurality of second functional units. The plurality of second functional units can more flexibly support various types of services, thereby improving communication performance.

The following describes implementations of embodiments of this application in detail with reference to communication systems.

The communication method provided in embodiments of this application may be applied to any communication system. The communication system may be a 3rd generation partnership project (the 3rd generation partnership project, 3GPP) communication system, for example, a long term evolution (long term evolution, LTE) system, or may be a 5G mobile communication system, an LTE and 5G hybrid networking system, a new radio (new radio, NR) system, a vehicle to everything (vehicle to everything, V2X) system, a device-to-device (device-to-device, D2D) communication system, a machine-to-machine (machine to machine, M2M) communication system, an internet of things (internet of things, IoT), a narrowband internet of things (narrowband internet of things, NB-IoT) system, eMBB, URLLC, machine type communication (machine type communication, MTC), mMTC, customer premise equipment (customer premise equipment, CPE), augmented reality (augmented reality, AR), virtual reality (virtual reality, VR), and various types of next-generation communication systems, for example, a 5.5G communication system and a 6th generation (6th generation, 6G) mobile communication system, or may be a non-terrestrial network (non-terrestrial network, NTN) system (for example, a satellite communication system), a non-3GPP communication system, or the like. This is not limited.

The LTE is long term evolution of universal mobile telecommunications system (universal mobile telecommunications system, UMTS) technical standards formulated by the 3GPP organization. Radio access in the 5G communication system may be referred to as NR, which is short for a new radio access technology in 3GPP; or may be referred to as 5G-NR for short. A base station in the LTE is referred to as an eNB, and a base station in the NR is referred to as a gNB.

The eMBB is further improvement of performance such as user experience based on a mobile broadband service scenario, and is also an application scenario closest to daily life of a user. The most intuitive experience brought by the 5G communication system in this aspect is that a network speed is greatly increased. Even if a 4K high-definition video is watched, a peak rate can reach 10 Gbps. For example, the eMBB may be heavy-traffic mobile broadband services such as a three-dimensional (3 dimensions, 3D) or ultra-high-definition video.

The URLLC features high reliability, low latency, and extremely high availability. The URLLC may include the following scenarios and applications: industrial application and control, traffic safety and control, remote manufacturing, remote training, remote surgery, and the like. The URLLC has great potential in a self driving service. In addition, the URLLC is also very important for the security industry. For example, the URLLC may be services, such as self driving or industrial automation, that require a low-latency and high-reliability connection.

The MTC may also be referred to as machine to machine (machine to machine, M2M), and features low costs and enhanced coverage.

The NB-IoT features wide coverage, numerous connections, a low rate, low costs, low power consumption, an excellent architecture, and the like, for example, massive connections, lower power consumption, and lower chip costs, and is applied to, for example, a smart water meter, smart parking, smart pet tracking, a smart bicycle, a smart smoke detector, a smart toilet, and a smart vending machine.

The CPE is a mobile signal access device that receives a mobile signal and forwards the mobile signal via a wireless fidelity (wireless fidelity, Wi-Fi) signal, is also a device that converts a high-speed 4G or 5G signal into a Wi-Fi signal, and can support a large quantity of mobile terminals to access the internet at the same time. The CPE can be widely used in rural areas, towns, hospitals, organizations, factories, residential communities, and the like for wireless network access, thereby reducing costs of wired network deployment.

The V2X is a key technology for a future intelligent transportation system, and can implement communication between vehicles, between a vehicle and a base station, and between base stations, to obtain a series of traffic information such as real-time road conditions, road information, and pedestrian information, thereby improving driving safety, reducing congestion, improving traffic efficiency, providing in-vehicle infotainment information, and the like.

In addition, embodiments of this application are applicable to both a homogeneous network scenario and a heterogeneous network scenario, and a transmission point is not limited. Embodiments of this application may be applied to coordinated multipoint transmission between macro base stations, between micro base stations, and between a macro base station and a micro base station, and are applicable to both a frequency division duplex (frequency division duplex, FDD) system and a time division duplex (time division duplex, TDD) system. Embodiments of this application are applicable to both a low-frequency scenario (sub 6 GHz) and a high-frequency scenario (above 6 GHz), terahertz, optical communication, and the like. This is not limited.

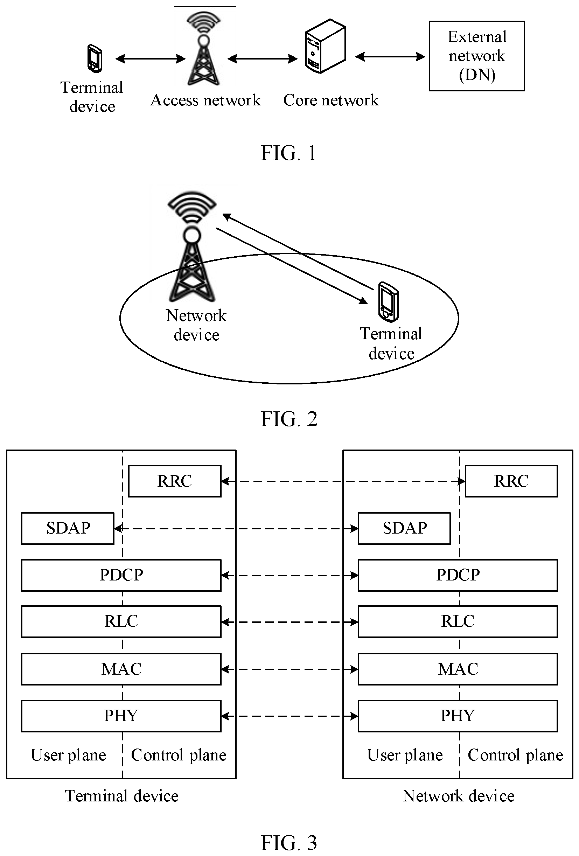

The following uses FIG. 1 as an example to describe a communication system provided in embodiments of this application.

FIG. 1 is a diagram of a communication system according to an embodiment of this application. As shown in FIG. 1, the communication system may include a terminal device, an access network, a core network, and an external network (for example, a data network (data network, DN)).

The terminal device in FIG. 1 may be a device having a wireless transceiver function, or a chip or chip system that can be disposed in the device. The terminal device can allow a user to access a network, and is a device configured to provide voice and/or data connectivity for the user. As shown in FIG. 2, the terminal device may complete air interface interaction with the access network. The terminal device may send a signal to a network device in the access network, or receive a signal sent by a network device in the access network. The terminal device may also be referred to as user equipment (user equipment, UE), a subscriber unit (subscriber unit), a terminal (terminal), a mobile station (mobile station, MS), a mobile terminal (mobile terminal, MT), or the like. The terminal device may be vehicle-mounted, portable, handheld, or the like. This is not limited. It may be understood that the terminal device and a mobile user may be completely independent of each other. All information related to the user may be stored in a subscriber identity module (subscriber identity module, SIM) card, and the SIM card may be used in the terminal device.

The terminal device may include a user plane (user plane, UP) protocol stack and a control plane (control plane, CP) protocol stack. As shown in FIG. 3, the user plane protocol stack may include a service data adaptation protocol (service data adaptation protocol, SDAP) layer, a packet data convergence protocol (packet data convergence protocol, PDCP) layer, a radio link control (radio link control, RLC) layer, a media access control (medium access control, MAC) layer, and a physical layer (physical layer, PHY). The control plane protocol stack may include a radio resource control (radio resource control, RRC) layer, a PDCP layer, an RLC layer, a MAC layer, and a PHY layer.

For example, the terminal device may be a mobile phone (mobile phone), a tablet computer, or a computer having a wireless transceiver function. The terminal device may alternatively be a user station, a mobile station, a remote station, a remote terminal device, a mobile terminal device, a user terminal device, a wireless communication device, a user agent, a user apparatus, a cellular phone, a cordless phone, a session initiation protocol (session initiation protocol, SIP) phone, a wireless local loop (wireless local loop, WLL) station, a personal digital assistant (personal digital assistant, PDA), a tablet computer (PAD or tablet), a handheld device having a wireless communication function, a compute device, a processing device connected to a wireless modem, a vehicle-mounted device, a wearable device, a terminal device in an internet of things, a household appliance, a virtual reality (virtual reality, VR) terminal, an augmented reality (augmented reality, AR) terminal, a wireless terminal in industrial control, a wireless terminal in self driving, a wireless terminal in telemedicine, a wireless terminal in a smart grid, a wireless terminal in a smart city (smart city), a wireless terminal in a smart home (smart home), a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, a Wi-Fi terminal device (for example, a vehicle-mounted terminal, smartphone, or PAD that has a function of connecting to a Wi-Fi access point (access point, AP)), a terminal device in a future network, a terminal device in a future evolved public land mobile network (public land mobile network, PLMN), or the like. This is not limited.

The PLMN is a network established and operated for providing land mobile communication services to the public.

For the access network in FIG. 1, in embodiments of this application, the network device in the access network may be split into a first functional unit on a network side and one or more second functional units on the network side.

The network device may be any device that is deployed in the access network and that can perform wireless communication with the terminal device (to be specific, may send a signal to the terminal device or receive a signal sent by the terminal device), or may be a chip or chip system that can be disposed in the device, or may be a logic node or a logic module or a function implemented by software; and is configured to be responsible for all functions related to an air interface (namely, an air interface), for example, a radio link maintenance function for maintaining a radio link between the network device and the terminal device and being responsible for protocol conversion between radio link data and internet protocol (Internet Protocol, IP) data, a radio resource management function including radio link setup and release, radio resource scheduling and allocation, and the like, and some mobility management functions including configuring the terminal device to perform measurement, evaluating radio link quality of the terminal device, and determining inter-cell handover of the terminal device. The network device may be a device that supports wired access, or may be a device that supports wireless access.

The network device may include a user plane protocol stack and a control plane protocol stack. As shown in FIG. 3, the user plane protocol stack may include an SDAP layer, a PDCP layer, an RLC layer, a MAC layer, and a PHY layer. The control plane protocol stack may include an RRC layer, a PDCP layer, an RLC layer, a MAC layer, and a PHY layer. The layers of the network device may be connected to the layers of the terminal device to transmit information.

For example, the network device may include one or more access network (access network, AN) or radio access network (radio access network, RAN) nodes. The AN/RAN node may be a base station, a further evolved NodeB (gNB), a small cell, a micro cell, a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a Wi-Fi AP, or the like. The base station may be a 4G, 5G, 5.5G, or future 6G base station, or the like. This is not limited. The Wi-Fi AP may be a Wi-Fi 5 AP, a Wi-Fi 6 AP, a future Wi-Fi AP product, or the like. This is not limited.

In another example, the network device may include a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components in a rack.

In still another example, the network device may alternatively be a device including a central unit (central unit, CU) node, or including a distributed unit (distributed unit, DU) node, or including a CU node and a DU node. For example, the network device may be divided into a CU and a DU from the perspective of logic functions. Some protocol layer functions are centrally controlled by the CU; and a part or all of remaining protocol layer functions are distributed in the DU, and the CU centrally controls the DU. The CU and the DU may be separately disposed, or may be included in a same network element, for example, a BBU. Further, the central unit CU may be divided into a control plane (CU-CP) and a user plane (CU-UP).

In still yet another example, the network device may alternatively be a device including a radio unit (radio unit, RU) or including a CU, a DU, and an RU. The RU may be included in a radio frequency device or a radio frequency unit, for example, included in an RRU, an active antenna unit (active antenna unit, AAU), or a remote radio head (remote radio head, RRH).

It may be understood that in different systems, the CU (or the CU-CP and the CU-UP), the DU, or the RU may also have different names, but a person skilled in the art may understand meanings of the names. For example, in an open radio access network (open radio access network, O-RAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by a software module, a hardware module, or a combination of a software module and a hardware module.

Based on the foregoing description of the network device, in embodiments of this application, the network device includes one first functional unit on a network side and one or more second functional units on the network side. That is, a modular design is used to decouple the first functional unit from the one or more second functional units. The one or more second functional units may flexibly support various types of services (for example, may support a To C service, and may further better support a To B service, a flexible customized service, and differentiated requirements of various industries), thereby improving communication performance.

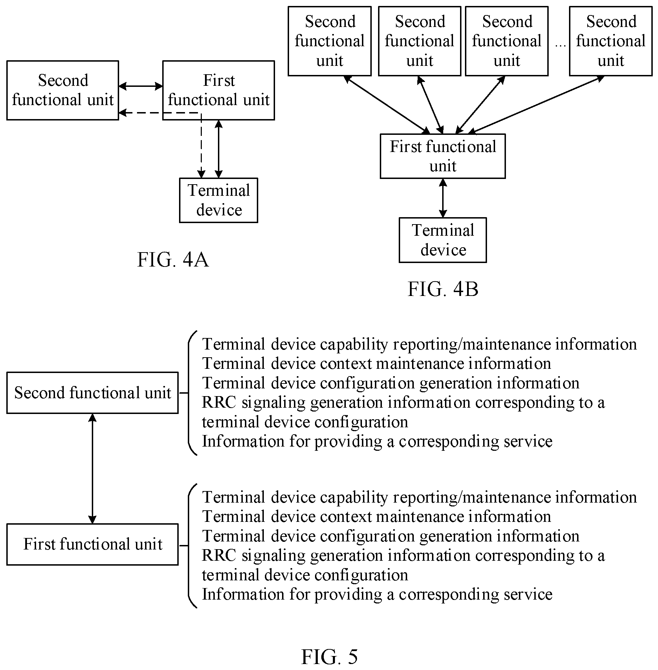

As shown in FIG. 4A and FIG. 4B, each first functional unit may correspond to one or more second functional units. The first functional unit may also be referred to as a serving node (serving node, sNode), and the second functional unit may also be referred to as a cluster node (cluster node, cNode). A communication connection (for example, an air interface connection) may be established between the terminal device and the first functional unit, and there is no direct air interface connection between the terminal device and the second functional unit. The terminal device may communicate with the second functional unit via the first functional unit. The terminal device may be aware of the second functional unit, or the terminal device may not be aware of the second functional unit. This is not limited.

In embodiments of this application, a decoupling design is used for the first functional unit and the second functional unit. Each functional unit may separately manage related information of the functional unit. For example, as shown in FIG. 5, the first functional unit may manage terminal device capability reporting/maintenance information, terminal device context maintenance information, terminal device configuration generation information, RRC signaling generation information corresponding to a terminal device configuration, information for providing a corresponding service, and the like that correspond to the first functional unit. This is not limited. The second functional unit may manage terminal device capability reporting/maintenance information, terminal device context maintenance information, terminal device configuration generation information, RRC signaling generation information corresponding to a terminal device configuration, information for providing a corresponding service, and the like that correspond to the second functional unit. This is not limited.

In a first possible design, the first functional unit may correspond to a plurality of second functional units, the first functional unit may be configured to provide a connection interface for communicating with the terminal device, and the second functional unit may be configured to provide a function or information associated with a transceiver function of the connection interface.

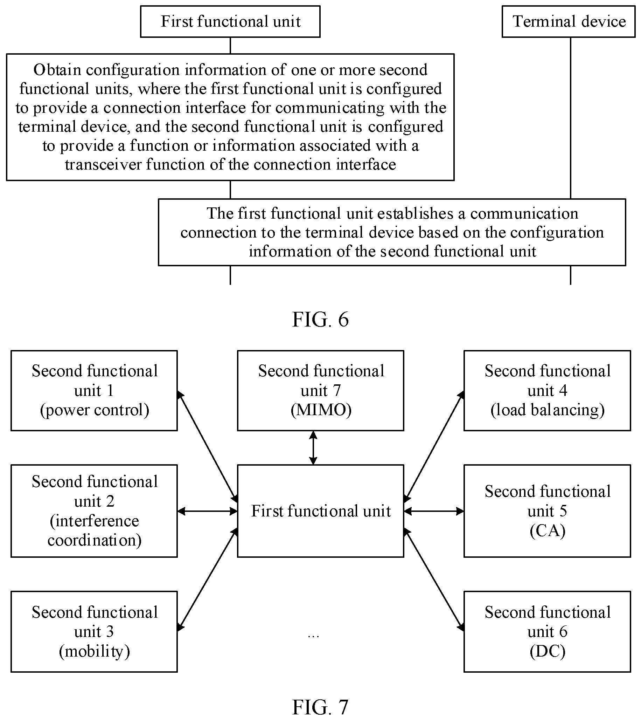

As shown in FIG. 6, the first functional unit may obtain configuration information of one or more second functional units, and establish a communication connection to the terminal device based on the configuration information of the second functional unit.

For example, the configuration information of the one or more second functional units may be preconfigured in the first functional unit, or the second functional unit may send the configuration information of the second functional unit to the first functional unit.

Optionally, the first functional unit may send the configuration information of the second functional unit to the terminal device, and the terminal device establishes a communication connection to the first functional unit based on the configuration information of the second functional unit.

Optionally, different second functional units may provide one or more same, different, or partially same functions. This is not limited.

For example, the second functional unit may be configured to provide one or more of the following functions: a computing function, a data function, an intelligence function, a sensing function, a power control function, an interference coordination function, a mobility function, a load balancing function, a slicing function, a beam management function, a bandwidth part (bandwidth part, BWP) function, a discontinuous reception (discontinuous reception, DRX) function, a supplementary uplink (supplementary uplink, SUL) function, a PDCP separation function, a multi-radio access technology dual connectivity (multi-radio access technology dual connectivity, MRDC) function, a carrier aggregation (carrier aggregation, CA) function, a multiple-input multiple-output (multiple input multiple output, MIMO) function, and a V2X function; a self-organizing network (self-organizing network, SON) function, a minimization of drive tests (minimization of drive tests, MDT) function, a non-public network (non-public network, NPN) function, an NTN function, a new radio unlicensed (NR-unlicensed, NR-U) function, a two-step random access function, an industrial internet of things (industrial IOT, IIoT) function, a power saving function, an integrated access and backhaul (integrated access and backhaul, IAB) function, a dual active protocol stack (dual active protocol stack, DAPS) function, a conditional handover (conditional handover, CHO) function, a small data function, a low-capability function, or a multimedia broadcast multicast service function.

For example, as shown in FIG. 7, a second functional unit 1 is configured to provide a power control function; a second functional unit 2 is configured to provide an interference coordination function; a second functional unit 3 is configured to provide a mobility function; a second functional unit 4 is configured to provide a load balancing function; a second functional unit 5 is configured to provide a CA function; a second functional unit 6 is configured to provide a DC function; and a second functional unit 7 is configured to provide a MIMO function.

In a second possible design, the first functional unit may correspond to one or more second functional units, the first functional unit may be configured to provide a connection function, the second functional unit may be configured to provide a first service function, and the first service function may include one or more of the following: a computing function, a data function, an intelligence function, or a sensing function.

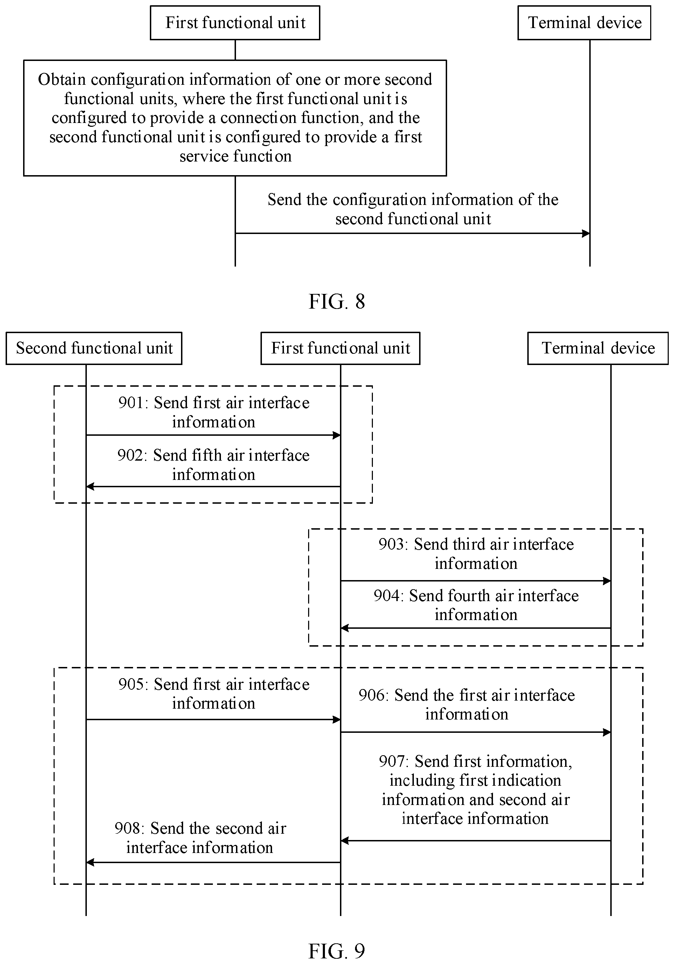

As shown in FIG. 8, the first functional unit may obtain configuration information of one or more second functional units, and the first functional unit may further send the configuration information of the second functional unit to the terminal device.

The first functional unit may establish a communication connection to the terminal device based on the configuration information of the second functional unit.

Optionally, different second functional units may provide one or more same, different, or partially same functions. This is not limited.

Optionally, the second functional unit may further be configured to provide one or more of the following functions: a power control function, an interference coordination function, a mobility function, a load balancing function, a slicing function, a beam management function, a BWP function, a DRX function, an SUL function, a PDCP separation function, an MRDC function, a CA function, a MIMO function, a V2X function, a SON function, an MDT function, an NPN function, an NTN function, an NR-U function, a two-step random access function, an IIoT function, a power saving function, an IAB function, a DAPS function, a CHO function, a small data function, a reduced capability function, or a multimedia broadcast multicast service function.

Based on the foregoing two possible designs, optionally, a second functional unit may further be added. For the second functional unit to be added, the first functional unit may obtain a registration request of the second functional unit, and determine, based on the registration request, whether to add the second functional unit.

The registration level request may be preconfigured, or may be sent by the second functional unit to the first functional unit. This is not limited.

Based on the foregoing two possible designs, optionally, each function that can be provided by the second functional unit may further be split into sub-functions of a finer granularity as logic functions for deployment. In other words, the second functional unit may be split into sub-functional units of a finer granularity as independent logic nodes for deployment.

For example, the intelligence function as an example. The intelligence function may further be split into an AI inference function and an AI training function; and correspondingly, the second functional unit that provides the intelligence function may be split into a second functional unit that provides the AI inference function and a second functional unit that provides the AI training function. Alternatively, the AI training function may further be split into functions such as a federated learning function and a centralized training function based on a specific training manner; and correspondingly, the second functional unit that provides the AI training function may be split into a second functional unit that provides the federated learning function and a second functional unit that provides the centralized training function. Alternatively, the intelligence function may be split based on different AI models. For example, the intelligence function is split into a neural network-based intelligence function, a reinforcement learning (reinforcement learning, RL)-based intelligence function, a convolutional neural network (convolutional neural network, CNN)-based intelligence function, a recurrent neural network (also referred to as a recursive neural network, recurrent neural network, RNN)-based intelligence function, a graphic neural network (graphic neural network, GNN)-based intelligence function, and a transformer-based intelligence function; and correspondingly, the second functional unit that provides the intelligence function may be split into a second functional unit that provides the neural network-based intelligence function, a second functional unit that provides the RL-based intelligence function, a second functional unit that provides the CNN-based intelligence function, a second functional unit that provides the RNN-based intelligence function, a second functional unit that provides the GNN-based intelligence function, and a second functional unit that provides the transformer-based intelligence function. This is not limited.

For the core network in FIG. 1, in the communication system, a mobile communication network may be divided into three parts: a base station subsystem, a network subsystem, and a system support part (for example, security management). The core network is located in the network subsystem. The core network is mainly used to connect a call request or a data request from an air interface to different networks. As a core part of the mobile communication network, the core network plays a connection role, and is mainly responsible for processing mobility management, session management, and data transmission (core functions) of terminal users. Based on a 4G evolved packet core (evolved packet core, EPC), a 5G core network has three new enhancements: a service-based architecture, support for network slicing, and separation of a control plane and a user plane. Compared with a 4G core network, the 5G core network evolves to a separated architecture. First, network functions are separated, and a cloud-native design idea of network function virtualization (network function virtualization, NFV) is absorbed to construct a network in a software-based, modular, and service-oriented manner. Second, the control plane is separated from the user plane, so that user plane functions are not restricted by "centralization", and can be flexibly deployed in both the core network and the access network.

The core network is mainly used to provide a user connection, manage users, and complete service bearing; and serves as a bearer network to provide an interface to an external network. Establishment of the user connection includes functions such as mobility management (mobility management, MM), calling management (calling management, CM), switching/routing, and recording notification (establishing a connection relationship with an intelligent network peripheral device in combination with an intelligent network service). User management includes user descriptions, quality of service (quality of service, QoS) (descriptions of user service QoS are added), user communication accounting (Accounting), a virtual home environment (virtual home environment, VHE) (providing a virtual home environment through a dialog with an intelligent network platform), and security (an authentication center provides corresponding security measures, including security management for mobile services and security processing for external network access). A bearer connection (access to) includes an external public switched telephone network (public switched telephone network, PSTN), an external circuit data network, a packet data network, an internet (Internet), an enterprise intranet (Intranet), a short message service (short message service, SMS) server of a mobile network, and the like. Basic services that can be provided by the core network include mobile office, e-commerce, communication, an entertainment service, a travel and location-based service, a telemetry (telemetry) service, a simple message transfer service (monitoring and control), and the like. This is not limited.

It may be understood that devices such as the terminal device, the first functional unit, and the second functional unit in embodiments of this application may be one or more chips, or may be a system on chip (system on chip, SOC), or the like. FIG. 4A and FIG. 4B are merely an example accompany drawing, and a quantity of devices included in FIG. 4A and FIG. 4B is not limited. In addition, names of devices and names of links in FIG. 4A and FIG. 4B are not limited. In addition to the names shown in FIG. 4A and FIG. 4B, the devices and the links may also have other names. This is not limited.

In addition, actions, terms, and the like in embodiments of this application may be mutually referenced. This is not limited. In embodiments of this application, names of messages exchanged between devices, names of parameters in the messages, or the like are merely examples. Other names may be used during specific implementation. This is not limited.

With reference to the communication system shown in FIG. 4A and FIG. 4B, the following describes in detail modes of communication between the terminal device, the first functional unit, and the second functional unit with reference to FIG. 9 to FIG. 25. The first functional unit may be any first functional unit in the communication system shown in FIG. 4A and FIG. 4B, the second functional unit may be any second functional unit in the communication system shown in FIG. 4A and FIG. 4B, and the terminal device may be any terminal device in the communication system shown in FIG. 4A and FIG. 4B. In addition, the following uses one second functional unit as an example for description. It may be understood that each second functional unit in the access network may communicate with reference to the following description.

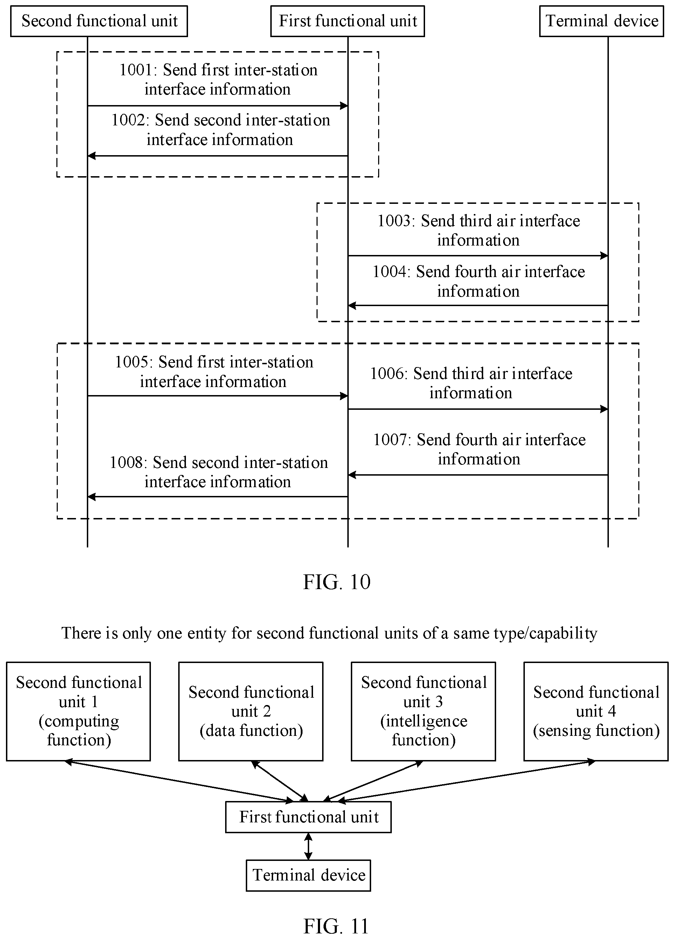

When the terminal device may be aware of the second functional unit, the terminal device, the first functional unit, and the second functional unit may communicate with each other in a mode shown in FIG. 9. The communication mode may also be referred to as an air interface proxy mode or an RRC proxy (RRC proxy) mode. Alternatively, when the terminal device may not be aware of the second functional unit, the terminal device, the first functional unit, and the second functional unit may communicate with each other according to a method shown in FIG. 10. The communication mode may also be referred to as an inter-station interface proxy mode or an Xn proxy (Xn proxy) mode.

FIG. 9 is a diagram of a communication method according to an embodiment of this application. In the communication method, a terminal device may be aware of a second functional unit; and the terminal device, a first functional unit, and the second functional unit may communicate with each other in an RRC proxy mode. As shown in FIG. 9, the method includes the following steps.

Step 901: The second functional unit sends first air interface information to the first functional unit; and correspondingly, the first functional unit receives the first air interface information from the second functional unit.

Step 902: The first functional unit sends fifth air interface information to the second functional unit; and correspondingly, the second functional unit receives second air interface information from the first functional unit.

When sending information to the first functional unit, the second functional unit may send the information based on air interface information (for example, the first air interface information). When sending information to the second functional unit, the first functional unit may also send the information based on air interface information (for example, the fifth air interface information).

For example, the second functional unit sends configuration information of the second functional unit to the first functional unit. The second functional unit may include the configuration information of the second functional unit in the first air interface information and send the first air interface information to the first functional unit; and the first functional unit may determine the configuration information of the second functional unit based on the received first air interface information.

Optionally, the air interface information may be one or more of the following: RRC information, MAC information, PHY information, or the like. This is not limited.

Similar to a case in which the first functional unit and the second functional unit communicate with each other based on the air interface information shown in step 901 and step 902, as shown in step 903 and step 904, the terminal device and the first functional unit may also communicate with each other based on air interface information.

Step 903: The first functional unit sends third air interface information to the terminal device; and correspondingly, the terminal device receives the third air interface information from the first functional unit.

Step 904: The terminal device sends fourth air interface information to the first functional unit; and correspondingly, the first functional unit receives the fourth air interface information from the terminal device.

When sending information to the terminal device, the first functional unit may send the information based on air interface information (for example, the third air interface information). When sending information to the first functional unit, the terminal device may also send the information based on air interface information (for example, the fourth air interface information).

Similar to communication based on the air interface information shown in step 901 to step 904, as shown in step 905 to step 908, the terminal device and the second functional unit may also communicate with each other based on air interface information.

Step 905: The second functional unit sends first air interface information to the first functional unit; and correspondingly, the first functional unit receives the first air interface information from the second functional unit.

Step 906: The first functional unit sends the first air interface information to the terminal device; and correspondingly, the terminal device receives the first air interface information from the first functional unit.

When sending information to the terminal device via the first functional unit, the second functional unit may send the information based on air interface information (for example, the first air interface information). Because the terminal device may be aware of the second functional unit, the first functional unit may directly forward, to the terminal device, air interface information (for example, the first air interface information) sent by the second functional unit, and the terminal device parses the received air interface information.

When the first functional unit forwards, to the terminal device, the first air interface information sent by the second functional unit, the first functional unit may parse the first air interface information, or may not parse the first air interface information (in this case, it may also be described as that the first functional unit transparently transmits the first air interface information of the second functional unit to the terminal device). This is not limited.

For example, the configuration information of the second functional unit is sent. The second functional unit may include the configuration information of the second functional unit in the first air interface information and send the first air interface information to the first functional unit; and the first functional unit may determine the configuration information of the second functional unit based on the received first air interface information. The first functional unit may alternatively forward, to the terminal device, the first air interface information sent by the second functional unit, and the terminal device may obtain the configuration information of the second functional unit by parsing the first air interface information.

Step 907: The terminal device sends first information to the first functional unit; and correspondingly, the first functional unit receives the first information from the terminal device.

The first information includes first indication information and second air interface information, and the first indication information indicates the first functional unit to send the second air interface information to the second functional unit.

Optionally, in some embodiments, the terminal device separately sends the first indication information and the second air interface information to the first functional unit; and correspondingly, the first functional unit receives the first indication information and the second air interface information from the terminal device. The first indication information indicates the first functional unit to send the second air interface information to the second functional unit.

Step 908: The first functional unit sends the second air interface information to the second functional unit based on the first indication information; and correspondingly, the second functional unit receives the second air interface information from the first functional unit.

Specifically, when sending information to the second functional unit, the terminal device may include the information to be sent to the second functional unit in the second air interface information, include the second air interface information and the first indication information in the first information, and send the first information to the first functional unit; and after receiving the first information, the first functional unit can process and terminate the first indication information in the first information, and send the second air interface information to the second functional unit based on the first indication information in the first information.

For example, the first indication information may be RRC proxy information.

When sending the first information to the first functional unit, the terminal device may include the first information in air interface information (for example, the fourth air interface information) and send the air interface information to the first functional unit.

When the first functional unit forwards, to the second functional unit, the second air interface information sent by the terminal device, the first functional unit may parse the second air interface information, or may not parse the second air interface information (in this case, it may also be described as that the first functional unit transparently transmits the second air interface information of the terminal device to the second functional unit). This is not limited.

Different from the RRC proxy mode shown in FIG. 9, an Xn proxy mode is described in detail with reference to the following method shown in FIG. 10.

FIG. 10 is a diagram of a communication method according to an embodiment of this application. In the communication method, a terminal device may not be aware of a second functional unit; and the terminal device, a first functional unit, and the second functional unit may communicate with each other in an Xn proxy mode. As shown in FIG. 10, the method includes the following steps.

Step 1001: The second functional unit sends first inter-station interface information to the first functional unit; and correspondingly, the first functional unit receives the first inter-station interface information from the second functional unit.

Step 1002: The first functional unit sends second inter-station interface information to the second functional unit; and correspondingly, the second functional unit receives the second inter-station interface information from the first functional unit.

When sending information to the first functional unit, the second functional unit may send the information based on inter-station interface information (for example, the first inter-station interface information). When sending information to the second functional unit, the first functional unit may also send the information based on inter-station interface information (for example, the second inter-station interface information).

For example, the second functional unit sends configuration information of the second functional unit to the first functional unit. The second functional unit may include the configuration information of the second functional unit in the first inter-station interface information and send the first inter-station interface information to the first functional unit; and the first functional unit may determine the configuration information of the second functional unit based on the received first inter-station interface information.

Optionally, the inter-station interface information may be Xn proxy information.

Different from a case in which the first functional unit and the second functional unit communicate with each other based on the inter-station interface information shown in step 1001 and step 1002, as shown in step 1003 and step 1004, the terminal device and the first functional unit may communicate with each other based on air interface information.

Step 1003: The first functional unit sends third air interface information to the terminal device; and correspondingly, the terminal device receives the third air interface information from the first functional unit.

Step 1004: The terminal device sends fourth air interface information to the first functional unit; and correspondingly, the first functional unit receives the fourth air interface information from the terminal device.

When sending information to the terminal device, the first functional unit may send the information based on air interface information (for example, the third air interface information). When sending information to the first functional unit, the terminal device may also send the information based on air interface information (for example, the fourth air interface information).

Different from communication based on the inter-station interface information or the air interface information shown in step 1001 to step 1004, as shown in step 1005 to step 1008, the terminal device and the second functional unit may communicate with each other based on air interface information and inter-station interface information.

Step 1005: The second functional unit sends first inter-station interface information to the first functional unit; and correspondingly, the first functional unit receives the first inter-station interface information from the second functional unit.

Step 1006: The first functional unit determines third air interface information based on the first inter-station interface information, and sends the third air interface information to the terminal device; and correspondingly, the terminal device receives the third air interface information from the first functional unit.

When forwarding, to the terminal device, information sent by the second functional unit, the first functional unit may convert the inter-station interface information sent by the second functional unit into air interface information that can be parsed by the terminal device (for example, convert the first inter-station interface information into the third air interface information).

For example, the configuration information of the second functional unit is sent. The second functional unit may include the configuration information of the second functional unit in the first inter-station interface information and send the first inter-station interface information to the first functional unit; and the first functional unit may determine the configuration information of the second functional unit based on the received first inter-station interface information. The first functional unit may alternatively convert the first inter-station interface information sent by the second functional unit into the third air interface information, and forward the third air interface information to the terminal device; and the terminal device may obtain the configuration information of the second functional unit by parsing the third air interface information.

Step 1007: The terminal device sends fourth air interface information to the first functional unit; and correspondingly, the first functional unit receives the fourth air interface information from the terminal device.

Step 1008: The first functional unit encapsulates the fourth air interface information into second inter-station interface information, and sends the second inter-station interface information to the second functional unit; and correspondingly, the second functional unit receives the second inter-station interface information from the first functional unit.

Specifically, when forwarding, to the second functional unit, information sent by the terminal device, the first functional unit may convert the air interface information sent by the terminal device into an inter-station interface that can be parsed by the second functional unit (for example, convert the fourth air interface information into the second inter-station interface information).

According to the methods shown in FIG. 9 and FIG. 10, the first functional unit may determine, based on the following two possible designs, a second functional unit corresponding to the terminal device, to perform information routing and forwarding between the terminal device and the second functional unit.

The first functional unit may determine, based on one or more of the following, the second functional unit corresponding to the terminal device: type/capability identification information of the second functional unit, identification information of the second functional unit, identification information of the terminal device, and task identification information.

In a first possible design, for example, there is only one entity for second functional units of a same type/capability. The first functional unit may determine, based on one or more of the following four examples, the second functional unit corresponding to the terminal device.

Different second functional units correspond to different types/capabilities, or different second functional units provide different functions. For example, as shown in FIG. 11, a second functional unit 1 provides a computing function, a second functional unit 2 provides a data function, a second functional unit 3 provides an intelligence function, and a second functional unit 4 provides a sensing function.

In a first example, the first functional unit may determine, based on the type/capability identification information of the second functional unit, the second functional unit corresponding to the terminal device.

The first functional unit may select, based on type/capability identification information of second functional units and terminal device information such as type information of the terminal device, service information of the terminal device, or capability information of the terminal device, one or more second functional units that match the terminal device.

For example, second functional units include the second functional unit 1 for providing the computing function, the second functional unit 2 for providing the data function, and the second functional unit 3 for providing the intelligence function. When the type information of the terminal device indicates computing, the first functional unit may determine the second functional unit 1 as the second functional unit corresponding to the terminal device; or when the service information of the terminal device indicates intelligence, the first functional unit may determine the second functional unit 3 as the second functional unit corresponding to the terminal device; or when the capability information of the terminal device indicates data and computing, the first functional unit may determine the second functional unit 2 and the second functional unit 1 as second functional units corresponding to the terminal device.

Optionally, when the terminal device may be aware of the second functional units, the terminal device may alternatively indicate, to the first functional unit, type/capability identification information, expected by the terminal device, of second functional units. The first functional unit determines, based on the type/capability identification information, expected by the terminal device, of the second functional units, the second functional unit corresponding to the terminal device.

Optionally, when the terminal device may be aware of the second functional units, after determining the second functional unit corresponding to the terminal device, the first functional unit may further indicate, to the terminal device, type/capability identification information of the second functional unit corresponding to the terminal device. In a subsequent communication process, the terminal device may include the type/capability identification information of the second functional unit corresponding to the terminal device in to-be-sent information. The first functional unit forwards, to the second functional unit corresponding to the terminal device, the information about the terminal device based on the type/capability identification information of the second functional unit carried in the information sent by the terminal device.

Optionally, regardless of whether the terminal device is aware of the second functional units, after determining the second functional unit corresponding to the terminal device, the first functional unit may store a mapping relationship between the identification information of the terminal device and the type/capability identification information of the second functional unit, to perform information routing and forwarding between the terminal device and the second functional unit based on the mapping relationship in a subsequent communication process.

In a second example, the first functional unit may determine, based on the task identification information, the second functional unit corresponding to the terminal device.

The first functional unit may select, for the terminal device based on type/capability identification information of second functional units and the task identification information of the terminal device, one or more second functional units that match this task.

For example, second functional units include the second functional unit 1 for providing the computing function, the second functional unit 2 for providing the data function, and the second functional unit 3 for providing the intelligence function. When the task identification information of the terminal device indicates a compute task, the first functional unit may determine the second functional unit 1 as the second functional unit corresponding to the terminal device; or when the task identification information of the terminal device indicates an intelligence task, the first functional unit may determine the second functional unit 3 as the second functional unit corresponding to the terminal device; or when the task identification information of the terminal device indicates a data task, the first functional unit may determine the second functional unit 2 as the second functional unit corresponding to the terminal device.

Optionally, when the terminal device may be aware of the second functional units, the terminal device may alternatively indicate, to the first functional unit based on the task identification information, type/capability identification information, expected by a task of the terminal device, of second functional units. The first functional unit determines, based on the type/capability identification information, expected by the task of the terminal device, of the second functional units, the second functional unit corresponding to the terminal device.

Optionally, when the terminal device may be aware of the second functional units, after determining the second functional unit corresponding to the terminal device, the first functional unit may further indicate, to the terminal device, type/capability identification information of the second functional unit corresponding to the terminal device. In a subsequent communication process, the terminal device may include the type/capability identification information of the second functional unit corresponding to the terminal device in to-be-sent information. The first functional unit forwards, to the second functional unit corresponding to the terminal device, the information about the terminal device based on the type/capability identification information of the second functional unit carried in the information sent by the terminal device.

Optionally, regardless of whether the terminal device is aware of the second functional units, after determining the second functional unit corresponding to the terminal device, the first functional unit may store a mapping relationship between the task identification information and the type/capability identification information of the second functional unit, or store a mapping relationship between the identification information of the terminal device and the type/capability identification information of the second functional unit, or store a mapping relationship between the identification information of the terminal device, the task identification information, and the type/capability identification information of the second functional unit, to perform information routing and forwarding between the terminal device and the second functional unit based on the stored mapping relationship in a subsequent communication process.

In a third example, the first functional unit may determine, based on the identification information of the second functional unit, the second functional unit corresponding to the terminal device.

When the terminal device may be aware of second functional units, after determining, in one communication process with reference to the first example or the second example, the second functional unit corresponding to the terminal device, the first functional unit may indicate, to the terminal device, identification information of the second functional unit corresponding to the terminal device. In this way, in a subsequent communication process, the terminal device may include the identification information of the second functional unit corresponding to the terminal device in to-be-sent information. The first functional unit forwards, to the second functional unit corresponding to the terminal device, the information about the terminal device based on the identification information of the second functional unit carried in the information sent by the terminal device.

Alternatively, regardless of whether the terminal device is aware of the second functional units, after determining, in one communication process with reference to the first example or the second example, the second functional unit corresponding to the terminal device, the first functional unit may store a mapping relationship between the identification information of the terminal device and the identification information of the second functional unit, or store a mapping relationship between the task identification information and the identification information of the second functional unit, or store a mapping relationship between the identification information of the terminal device, the task identification information, and the identification information of the second functional unit, or store a mapping relationship between the identification information of the terminal device, type/capability identification information of the second functional unit, and the identification information of the second functional unit, or store a mapping relationship between the task identification information, type/capability identification information of the second functional unit, and the identification information of the second functional unit, or store a mapping relationship between the identification information of the terminal device, the task identification information, type/capability identification information of the second functional unit, and the identification information of the second functional unit, to perform information routing and forwarding between the terminal device and the second functional unit based on the stored mapping relationship in a subsequent communication process.

In a fourth example, the first functional unit may determine, based on the identification information of the terminal device, the second functional unit corresponding to the terminal device.

Regardless of whether the terminal device is aware of second functional units, after determining, in one communication process with reference to the first example, the second example, or the third example, the second functional unit corresponding to the terminal device, the first functional unit may store a mapping relationship between the identification information of the terminal device and type/capability identification information of the second functional unit, or store a mapping relationship between the identification information of the terminal device and identification information of the second functional unit, or store a mapping relationship between the identification information of the terminal device, type/capability identification information of the second functional unit, and identification information of the second functional unit, or store a mapping relationship between the identification information of the terminal device, the task identification information, and type/capability identification information of the second functional unit, or store a mapping relationship between the identification information of the terminal device, the task identification information, and identification information of the second functional unit, or store a mapping relationship between the identification information of the terminal device, the task identification information, type/capability identification information of the second functional unit, and identification information of the second functional unit, to perform information routing and forwarding between the terminal device and the second functional unit based on the stored mapping relationship in a subsequent communication process.

In a second possible design, for example, there are a plurality of entities for second functional units of a same type/capability. The first functional unit may determine, based on one or more of the following four examples, the second functional unit corresponding to the terminal device.

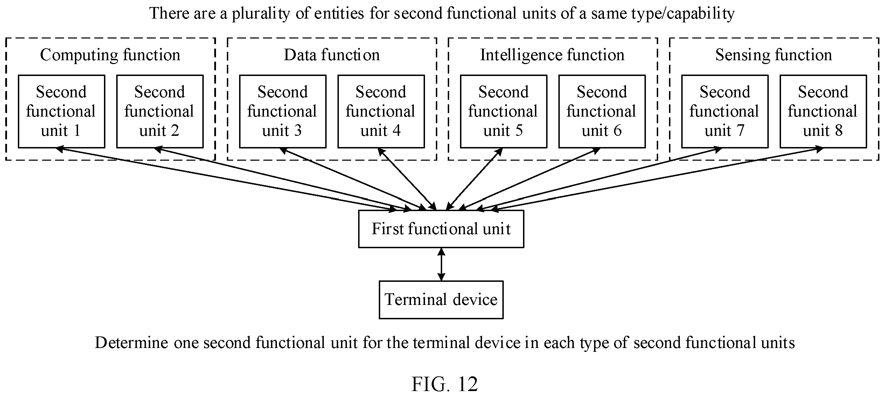

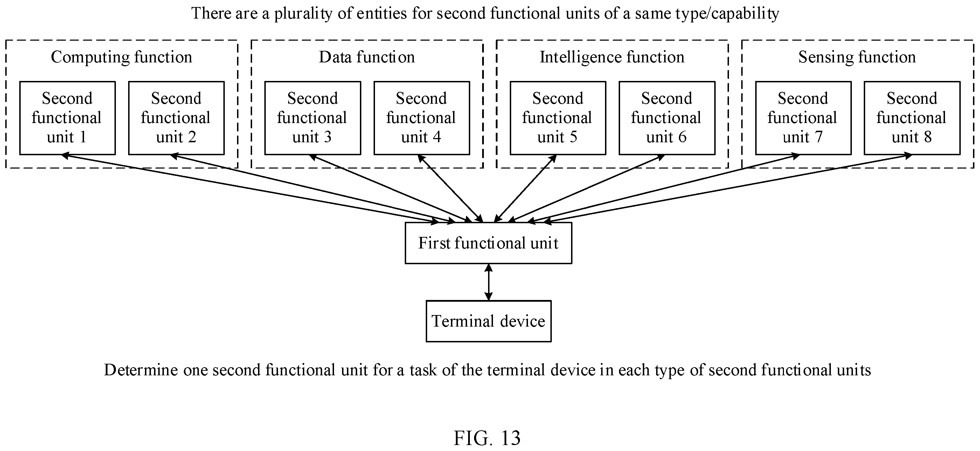

At least two second functional units correspond to a same type/capability, or at least two second functional units provide a same function. For example, as shown in FIG. 12 or FIG. 13, a second functional unit 1 and a second functional unit 2 provide a computing function, a second functional unit 3 and a second functional unit 4 provide a data function, a second functional unit 5 and a second functional unit 6 provide an intelligence function, and a second functional unit 7 and a second functional unit 8 provide a sensing function.

In a first example, the first functional unit may determine, based on the type/capability identification information of the second functional unit, the second functional unit corresponding to the terminal device.

The first functional unit may determine one or more types of second functional units for the terminal device based on type/capability identification information of second functional units and terminal device information such as type information of the terminal device, service information of the terminal device, or capability information of the terminal device. The first functional unit may further determine one second functional unit in each type of second functional units for the terminal device based on load information, power consumption information, and the like of each second functional unit in the one or more types of second functional units (for example, determine a second functional unit with low load as the second functional unit corresponding to the terminal device).

Second functional units of a same type provide a same function, and each type of second functional units may include one or more second functional units.

For example, second functional units include the second functional unit 1 and the second functional unit 2 that are configured to provide the computing function, the second functional unit 3 and the second functional unit 4 that are configured to provide the data function, the second functional unit 5 and the second functional unit 6 that are configured to provide the intelligence function, and the second functional unit 7 and the second functional unit 8 that are configured to provide the sensing function, as shown in FIG. 12. When the type information of the terminal device indicates computing, the first functional unit may determine a second functional unit with lower load in the second functional unit 1 and the second functional unit 2 as the second functional unit corresponding to the terminal device; or when the service information of the terminal device indicates intelligence, the first functional unit may determine a second functional unit with lower load in the second functional unit 5 and the second functional unit 6 as the second functional unit corresponding to the terminal device; or when the capability information of the terminal device indicates data and computing, the first functional unit may determine a second functional unit with lower load in the second functional unit 3 and the second functional unit 4 and a second functional unit with lower load in the second functional unit 1 and the second functional unit 2 as second functional units corresponding to the terminal device.

Optionally, when the terminal device may be aware of second functional units, the terminal device may alternatively indicate, to the first functional unit, type/capability identification information, expected by the terminal device, of second functional units. The first functional unit determines, based on the type/capability identification information, expected by the terminal device, of the second functional units and based on load information, power consumption information, and the like, that correspond to the type/capability identification information, of the second functional units, the second functional unit corresponding to the terminal device.

Optionally, when the terminal device may be aware of the second functional units, after determining the second functional unit corresponding to the terminal device, the first functional unit may further indicate, to the terminal device, type/capability identification information of the second functional unit corresponding to the terminal device. In a subsequent communication process, the terminal device may include the type/capability identification information of the second functional unit corresponding to the terminal device in to-be-sent information. The first functional unit determines, based on the type/capability identification information of the second functional unit carried in the information sent by the terminal device and based on the load information, the power consumption information, and the like, that correspond to the type/capability identification information, of the second functional units, the second functional unit corresponding to the terminal device, and forwards the information about the terminal device to the second functional unit corresponding to the terminal device.

Optionally, regardless of whether the terminal device is aware of the second functional units, after determining the second functional unit corresponding to the terminal device, the first functional unit may store a mapping relationship between the identification information of the terminal device and the type/capability identification information of the second functional unit, to perform information routing and forwarding between the terminal device and the second functional unit in a subsequent communication process based on the mapping relationship and based on the load information, the power consumption information, and the like, that correspond to the type/capability identification information of the second functional unit in the mapping relationship, of the second functional units.

In a second example, the first functional unit may determine, based on the task identification information, the second functional unit corresponding to the terminal device.

The first functional unit may determine one or more types of second functional units for a task of the terminal device based on type/capability identification information of second functional units and the task identification information of the terminal device. The first functional unit may further determine one second functional unit in each type of second functional units for the task of the terminal device based on load information, power consumption information, and the like of each second functional unit in the one or more types of second functional units (for example, determine a second functional unit with low load as the second functional unit corresponding to the terminal device).

It may be understood that different tasks of a same terminal device may correspond to second functional units of different types/capabilities, or may correspond to different second functional units in a plurality of second functional units of a same type/capability, or may correspond to a same second functional unit in a plurality of second functional units of a same type/capability. This is not limited.

In addition, for different terminal devices that perform a same task, the different terminal devices may correspond to a same second functional unit when performing the same task.

For example, second functional units include the second functional unit 1 and the second functional unit 2 that are configured to provide the computing function, the second functional unit 3 and the second functional unit 4 that are configured to provide the data function, the second functional unit 5 and the second functional unit 6 that are configured to provide the intelligence function, and the second functional unit 7 and the second functional unit 8 that are configured to provide the sensing function, as shown in FIG. 13. When the task identification information of the terminal device indicates a compute task, the first functional unit may determine a second functional unit with lower load in the second functional unit 1 and the second functional unit 2 as the second functional unit corresponding to the terminal device; or when the task identification information of the terminal device indicates an intelligence task, the first functional unit may determine a second functional unit with lower load in the second functional unit 5 and the second functional unit 6 as the second functional unit corresponding to the terminal device; or when the task identification information of the terminal device indicates a data task and a compute task, the first functional unit may determine a second functional unit with lower load in the second functional unit 3 and the second functional unit 4 and a second functional unit with lower load in the second functional unit 1 and the second functional unit 2 as second functional units corresponding to the terminal device.

Optionally, when the terminal device may be aware of second functional units, the terminal device may alternatively indicate, to the first functional unit based on the task identification information, type/capability identification information, expected by the task of the terminal device, of second functional units. The first functional unit determines, based on the type/capability identification information, expected by the task of the terminal device, of the second functional units and based on load information, power consumption information, and the like, that correspond to the type/capability identification information, of the second functional units, the second functional unit corresponding to the terminal device.

Optionally, when the terminal device may be aware of the second functional units, after determining the second functional unit corresponding to the terminal device, the first functional unit may further indicate, to the terminal device, type/capability identification information of the second functional unit corresponding to the terminal device. In a subsequent communication process, the terminal device may include the type/capability identification information of the second functional unit corresponding to the terminal device in to-be-sent information. The first functional unit determines, based on the type/capability identification information of the second functional unit carried in the information sent by the terminal device and based on the load information, the power consumption information, and the like, that correspond to the type/capability identification information, of the second functional units, the second functional unit corresponding to the terminal device, and forwards the information about the terminal device to the second functional unit corresponding to the terminal device.

Optionally, regardless of whether the terminal device is aware of the second functional units, after determining the second functional unit corresponding to the terminal device, the first functional unit may store a mapping relationship between the task identification information and the type/capability identification information of the second functional unit, or store a mapping relationship between the identification information of the terminal device and the type/capability identification information of the second functional unit, or store a mapping relationship between the identification information of the terminal device, the task identification information, and the type/capability identification information of the second functional unit, to perform information routing and forwarding between the terminal device and the second functional unit in a subsequent communication process based on the stored mapping relationship and based on the load information, the power consumption information, and the like, that correspond to the type/capability identification information of the second functional unit in the mapping relationship, of the second functional units.

In a third example, the first functional unit may determine, based on the identification information of the second functional unit, the second functional unit corresponding to the terminal device.

When the terminal device may be aware of second functional units, after determining, in one communication process with reference to the first example or the second example, the second functional unit corresponding to the terminal device, the first functional unit may indicate, to the terminal device, identification information of the second functional unit corresponding to the terminal device. In this way, in a subsequent communication process, the terminal device may include the identification information of the second functional unit corresponding to the terminal device in to-be-sent information. The first functional unit forwards, to the second functional unit corresponding to the terminal device, the information about the terminal device based on the identification information of the second functional unit carried in the information sent by the terminal device.

Alternatively, regardless of whether the terminal device is aware of the second functional units, after determining, in one communication process with reference to the first example or the second example, the second functional unit corresponding to the terminal device, the first functional unit may store a mapping relationship between the identification information of the terminal device and the identification information of the second functional unit, or store a mapping relationship between the task identification information and the identification information of the second functional unit, or store a mapping relationship between the identification information of the terminal device, the task identification information, and the identification information of the second functional unit, or store a mapping relationship between the identification information of the terminal device, type/capability identification information of the second functional unit, and the identification information of the second functional unit, or store a mapping relationship between the task identification information, type/capability identification information of the second functional unit, and the identification information of the second functional unit, or store a mapping relationship between the identification information of the terminal device, the task identification information, type/capability identification information of the second functional unit, and the identification information of the second functional unit, to perform information routing and forwarding between the terminal device and the second functional unit based on the stored mapping relationship in a subsequent communication process.

In a fourth example, the first functional unit may determine, based on the identification information of the terminal device, the second functional unit corresponding to the terminal device.

Regardless of whether the terminal device is aware of second functional units, after determining, in one communication process with reference to the first example, the second example, or the third example, the second functional unit corresponding to the terminal device, the first functional unit may store a mapping relationship between the identification information of the terminal device and type/capability identification information of the second functional unit, or store a mapping relationship between the identification information of the terminal device and identification information of the second functional unit, or store a mapping relationship between the identification information of the terminal device, type/capability identification information of the second functional unit, and identification information of the second functional unit, or store a mapping relationship between the identification information of the terminal device, the task identification information, and type/capability identification information of the second functional unit, or store a mapping relationship between the identification information of the terminal device, the task identification information, and identification information of the second functional unit, or store a mapping relationship between the identification information of the terminal device, the task identification information, type/capability identification information of the second functional unit, and identification information of the second functional unit, to perform information routing and forwarding between the terminal device and the second functional unit based on the stored mapping relationship in a subsequent communication process.

Based on the communication method shown in FIG. 9 or FIG. 10 and the foregoing two possible designs, optionally, when sending first indication information to the first functional unit, the terminal device may include, in the first indication information, one or more of the following: the type/capability identification information of the second functional unit, the identification information of the second functional unit, the identification information of the terminal device, and the task identification information. The first functional unit may determine the second functional unit based on the first indication information, and send second air interface information to the second functional unit. Alternatively, when sending the fourth air interface information to the first functional unit, the terminal device may include, in the fourth air interface information, one or more of the following: the type/capability identification information of the second functional unit, the identification information of the terminal device, and the task identification information. The first functional unit may determine the second functional unit based on the fourth air interface information, and send the second inter-station interface information to the second functional unit.

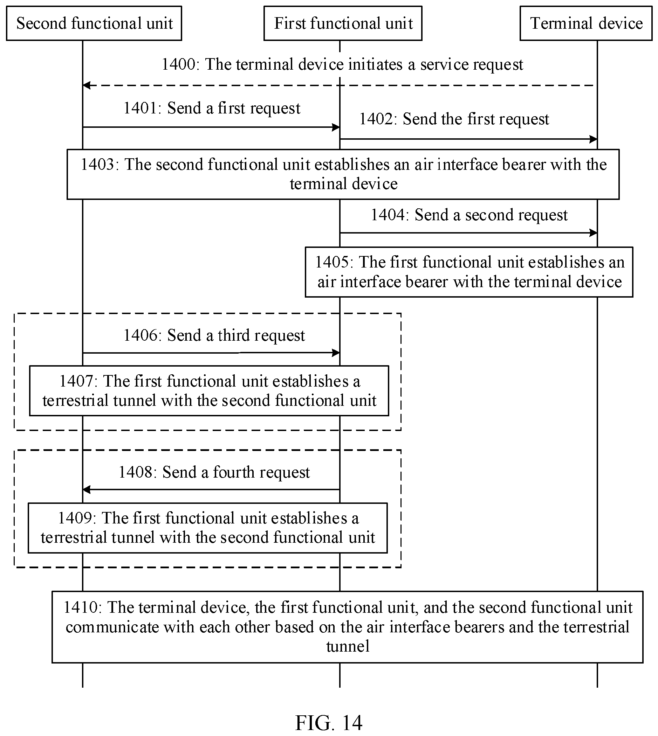

Based on the foregoing descriptions of communication between the terminal device, the first functional unit, and the second functional unit, optionally, the terminal device, the first functional unit, and the second functional unit may establish an air interface bearer and a terrestrial tunnel according to the following method shown in FIG. 14, and communicate with each other based on the established air interface bearer and terrestrial tunnel.

FIG. 14 is a diagram of a communication method according to an embodiment of this application. As shown in FIG. 14, the method may include the following steps.

Step 1401: A second functional unit sends a first request to a first functional unit; and correspondingly, the first functional unit receives the first request from the second functional unit.

The first request is for requesting to establish an air interface bearer between the second functional unit and a terminal device.

Optionally, the second functional unit may include the first request in air interface information or inter-station interface information and send the air interface information or the inter-station interface information to the first functional unit.

Step 1402: The first functional unit sends the first request to the terminal device; and correspondingly, the terminal device receives the first request from the first functional unit.

The first functional unit may include the first request in air interface information and send the air interface information to the terminal device.

Step 1403: The second functional unit establishes the air interface bearer with the terminal device.

Step 1404: The first functional unit sends a second request to the terminal device; and correspondingly, the terminal device receives the second request from the first functional unit.

The second request is for requesting to establish an air interface bearer between the first functional unit and the terminal device.

The first functional unit may include the second request in air interface information and send the air interface information to the terminal device.

Step 1405: The first functional unit establishes the air interface bearer with the terminal device.

Step 1406: The second functional unit sends a third request to the first functional unit; and correspondingly, the first functional unit receives the third request from the second functional unit.

The third request is for requesting to establish a terrestrial tunnel between the first functional unit and the second functional unit.

Optionally, the third request may include identification information of the terminal device and/or task identification information.

The second functional unit may include the third request in air interface information or inter-station interface information and send the air interface information or the inter-station interface information to the first functional unit.

Step 1407: The first functional unit establishes the terrestrial tunnel with the second functional unit.

Optionally, when the third request includes the identification information of the terminal device, the first functional unit and the second functional unit may establish a terrestrial tunnel corresponding to the terminal device (or described as that the terrestrial tunnel is at a terminal device granularity); or when the third request includes the task identification information, the first functional unit and the second functional unit may establish a terrestrial tunnel corresponding to this task (or described as that the terrestrial tunnel is at a task granularity), where the task may be a task on a terminal device side, or may be a task on a network side. This is not limited.

Alternatively, step 1406 and step 1407 may be replaced with step 1408 and step 1409.

Step 1408: The first functional unit sends a fourth request to the second functional unit; and correspondingly, the second functional unit receives the fourth request from the first functional unit.

The fourth request is for requesting to establish a terrestrial tunnel between the first functional unit and the second functional unit.

Optionally, the fourth request may include identification information of the terminal device and/or task identification information.

The first functional unit may include the fourth request in air interface information or inter-station interface information and send the air interface information or the inter-station interface information to the second functional unit.

Step 1409: The first functional unit establishes the terrestrial tunnel with the second functional unit.

Optionally, when the fourth request includes the identification information of the terminal device, the first functional unit and the second functional unit may establish a terrestrial tunnel corresponding to the terminal device (or described as that the terrestrial tunnel is at a terminal device granularity); or when the fourth request includes the task identification information, the first functional unit and the second functional unit may establish a terrestrial tunnel corresponding to this task (or described as that the terrestrial tunnel is at a task granularity), where the task may be a task on a terminal device side, or may be a task on a network side. This is not limited.

Optionally, FIG. 14 may further include step 1410.

Step 1410: The terminal device, the first functional unit, and the second functional unit communicate with each other based on the air interface bearers and the terrestrial tunnel.

The terminal device and the second functional unit may communicate with each other via the air interface bearer established in step 1403, the terminal device and the first functional unit may communicate with each other via the air interface bearer established in step 1405, and the first functional unit and the second functional unit may communicate with each other via the terrestrial tunnel established in step 1407 or step 1409.

For example, the terminal device participates in a federated training task triggered by the network side. The terminal device may send gradient information to the first functional unit via the air interface bearer between the terminal device and the first functional unit; or the terminal device may send gradient information to the first functional unit via the air interface bearer between the terminal device and the first functional unit, and the first functional unit sends the gradient information of the terminal device to the second functional unit via the terrestrial tunnel; or the terminal device may send gradient information to the second functional unit via the air interface bearer between the terminal device and the second functional unit.

The gradient information may be to-be-transmitted data of an intelligence task, and the second functional unit may be a second functional unit configured to provide an intelligence function.

Optionally, as shown in step 1400 in FIG. 14, the terminal device may initiate a service request, to trigger the terminal device, the first functional unit, and the second functional unit to establish the air interface bearers and the terrestrial tunnel according to the method shown in FIG. 14.

The terminal device may initiate the service request based on air interface information.

It may be understood that, in embodiments of this application, a sequence of establishing the air interface bearer between the terminal device and the first functional unit, establishing the air interface bearer between the terminal device and the second functional unit, and establishing the terrestrial tunnel between the first functional unit and the second functional unit is not limited.

Based on the foregoing description, in embodiments of this application, multi-element coordination at a terminal device granularity may further be provided, thereby improving network performance.

The multi-element coordination at the terminal device granularity is coordinated scheduling between resources such as computing, data, sensing, and connection resources that provide services for the terminal device, or is described as coordinated scheduling between functional units (for example, the first functional unit and the second functional unit) that provide services for the terminal device. To implement real-time multi-element coordination at the terminal device granularity, an information synchronization mechanism needs to be provided between functional units. A granularity of information synchronization may be a terminal device granularity, a task granularity on the terminal device side, a task granularity on the network side, or the like. This is not limited.

For example, the terminal device participates in an AI task of a network. The network side may provide a corresponding AI model for the terminal device, so that the terminal device assists the network side in performing inference, and sends an inference result to the network side for use. When computing load of the terminal device is high, the network side may deliver a smaller AI model to the terminal device, thereby reducing the computing load of the terminal device. From the perspective of the network side, a second functional unit that provides an intelligence function needs to subscribe to, from a second functional unit that provides a computing function, computing load information related to the terminal device, to perform coordination between the model and computing, thereby improving network performance.

In another example, terminal devices participate in a federated learning task triggered by the network side. The terminal devices need to report gradient information of the terminal devices to the network side, so that the network side performs model update and training based on the gradient information reported by the plurality of terminal devices. When a connection of the terminal device changes from good to poor (for example, the terminal device moves from a cell center to a cell edge), the network side may adjust accuracy of a gradient reported by the terminal device, to reduce excessive consumption of network connection bandwidth. From the perspective of the network side, a second functional unit that provides an intelligence function needs to subscribe to, from the first functional unit, connection information of the terminal device, so that the second functional unit that provides the intelligence function can correspondingly adjust a size of a used model based on the latest connection of the terminal device, to implement coordination between the model and the connection, thereby improving network performance.

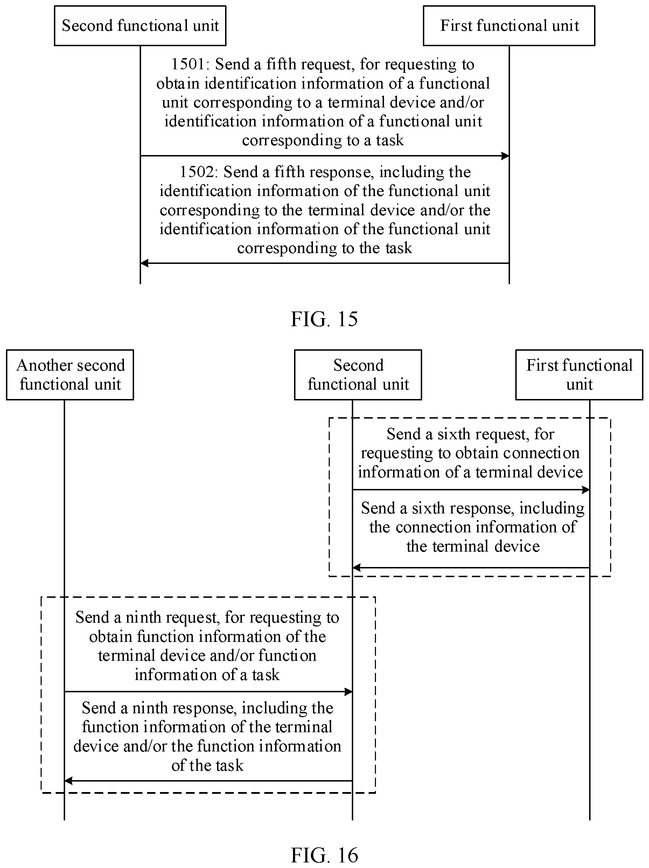

In view of this, the second functional unit may determine, from the first functional unit according to the following communication method shown in FIG. 15, a functional unit corresponding to the terminal device, and synchronize, according to the method shown in FIG. 16, information with the functional unit corresponding to the terminal device, to implement multi-element coordination, thereby improving network performance.

FIG. 15 is a diagram of a communication method according to an embodiment of this application. As shown in FIG. 15, the method may include the following steps.

Step 1501: A second functional unit sends a fifth request to a first functional unit; and correspondingly, the first functional unit receives the fifth request from the second functional unit.

The fifth request is for requesting to obtain identification information of a functional unit corresponding to a terminal device and/or identification information of a functional unit corresponding to a task, and the fifth request includes identification information of the terminal device and/or task identification information.

The first functional unit may serve as an allocation node of the second functional unit, maintain a mapping relationship between the terminal device and the second functional unit, and support a mechanism of querying the corresponding second functional unit based on the identification information of the terminal device. Alternatively, the first functional unit may maintain a mapping relationship between the task and the second functional unit, and support a mechanism of querying the corresponding second functional unit based on the task identification information.

The second functional unit supports a mechanism of querying, from the first functional unit, the functional unit corresponding to the terminal device or the task; and the second functional unit may send the fifth request to the first functional unit based on the mechanism.

Step 1502: The first functional unit sends a fifth response to the second functional unit; and correspondingly, the second functional unit receives the fifth response from the first functional unit.

The fifth response may include the identification information of the functional unit corresponding to the terminal device and/or the identification information of the functional unit corresponding to the task.

The first functional unit may determine, based on the maintained mapping relationship, the identification information of the functional unit corresponding to the terminal device or the task, and indicate the identification information to the second functional unit by using the fifth response.

According to the method shown in FIG. 15, optionally, the first functional unit may provide connection information of the terminal device, and support information synchronization based on a subscription mechanism, a broadcast mechanism, or the like, where information synchronization may be periodic synchronization or event notification synchronization (for example, information synchronization is triggered when reference signal received power (reference signal received power, RSRP) is less than a preset threshold, or a signal to interference plus noise ratio (signal to interference plus noise ratio, SINR) is less than a preset threshold, or another event occurs).

After successfully providing a service for the terminal device, the first functional unit may broadcast service information subscribed to by the terminal device, so that each second functional unit learns of latest subscription information of the terminal device, and performs on-demand information subscription and synchronization with another functional unit corresponding to the terminal device.

Similarly, the second functional unit may provide function information of the terminal device, and support a mechanism of subscribing to corresponding function information of the terminal device and/or the task, from the functional unit corresponding to the terminal device and/or the functional unit corresponding to the task.

For example, a second functional unit that provides a computing function may provide function information such as a computing capability, a quantity of compute tasks, and computing load; a second functional unit that provides a data function may provide function information such as a data capability, a quantity of data tasks, and a size of data storage space; a second functional unit that provides an intelligence function may provide function information such as a size, a type, and performance indicators (accuracy, latency, and the like) of a model currently used by the terminal device; and a second functional unit that provides a sensing function may provide function information such as sensing performance indicators (for example, accuracy) and a sensing type that are currently used by the terminal device.

For example, as shown in FIG. 16, the second functional unit may send a sixth request to the first functional unit, where the sixth request may be for requesting to obtain the connection information of the terminal device, and the sixth request may include the identification information of the terminal device. The first functional unit may send a sixth response to the second functional unit based on the sixth request, where the sixth response may include the connection information of the terminal device.

In another example, as shown in FIG. 16, the second functional unit may further send, based on the fifth response sent by the first functional unit, a ninth request to the functional unit corresponding to the terminal device and/or the functional unit corresponding to the task (for example, another second functional unit in FIG. 16), where the ninth request is for requesting to obtain the function information of the terminal device and/or function information of the task, and the ninth request includes the identification information of the terminal device and/or the task identification information. The another second functional unit may send a ninth response to the second functional unit based on the ninth request, where the ninth response may include the function information of the terminal device and/or the function information of the task.

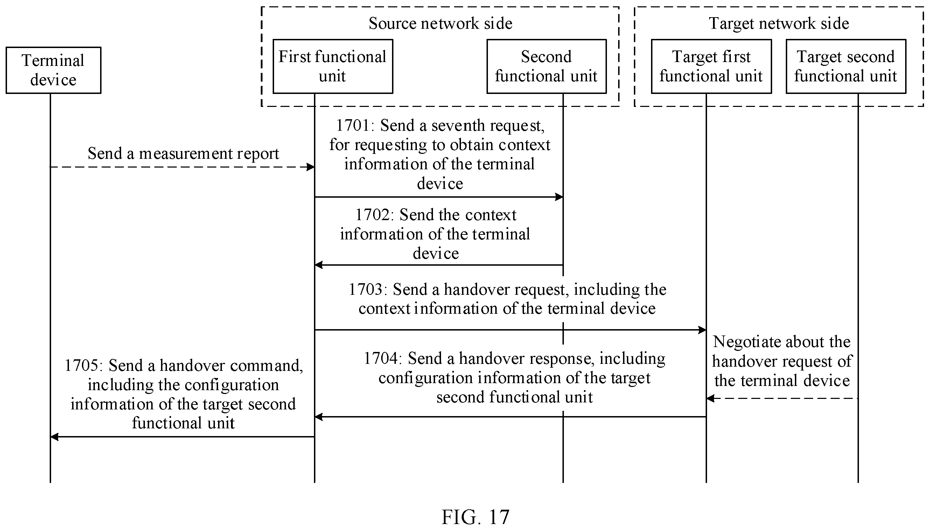

In this embodiment of this application, the first functional unit and the second functional unit each maintain context information of the terminal device. When the terminal device moves, context migration procedures of the terminal device may be shown in FIG. 17 to FIG. 24.

FIG. 17 is a diagram of a communication method according to an embodiment of this application. The method may be applied to a communication scenario in which a terminal device in a connected state performs cell handover. In the communication scenario, a source network side corresponding to the terminal device may include a first functional unit and a second functional unit, and a target network side corresponding to the terminal device may include a target first functional unit and a target second functional unit. As shown in FIG. 17, the method may include the following steps.

Step 1701: The first functional unit sends a seventh request to the second functional unit; and correspondingly, the second functional unit receives the seventh request from the first functional unit.

The seventh request is for requesting to obtain context information of the terminal device, and the seventh request includes identification information of the terminal device.

Optionally, the terminal device may send a measurement report to the first functional unit. When the first functional unit determines, based on the measurement report, that the terminal device needs to be handed over to the target network side, the first functional unit may send the seventh request to the second functional unit.

Step 1702: The second functional unit sends the context information of the terminal device to the first functional unit; and correspondingly, the first functional unit receives the context information of the terminal device from the second functional unit.

Because the source network side uses a modular design for the first functional unit and the second functional unit, the terminal device is no longer served by one source node, and may be served by a plurality of functional nodes on the source network side. Before the source network side sends a handover request to the target network side, the first functional unit and the second functional unit on the source network side may migrate context of the terminal device, to first transfer context of the terminal device maintained by each second functional unit to the first functional unit, and then transfer the context from the first functional node to the target first functional unit or the target second functional unit. A root cause is as follows: It is assumed that there is no direct connection between the second functional unit and the target first functional unit or the target second functional unit and that the handover request/decision-making is uniformly performed by the first functional unit and the target first functional unit, additional synchronization required under decision-making and execution of a plurality of functional units can be avoided.

Step 1703: The first functional unit sends the handover request to the target first functional unit; and correspondingly, the target first functional unit receives the handover request from the first functional unit.

The handover request includes the context information of the terminal device. The context information of the terminal device may include context information of the terminal device in the first functional unit and context information of the terminal device in the second functional unit.

Step 1704: The target first functional unit sends a handover response to the first functional unit; and correspondingly, the first functional unit receives the handover response from the target first functional unit.

The handover response includes configuration information of the target second functional unit.

After receiving the handover request, the target first functional unit may forward the context information of the terminal device to the target second functional unit, and the target first functional unit and the target second functional unit may negotiate about the handover request of the terminal device (for example, accept or reject the handover request of the terminal device). After the target first functional unit accepts the terminal device, the target first functional unit may include the configuration information of the target second functional unit in the handover response, and deliver the handover response to the terminal device via the first functional unit. The configuration information of the target second functional unit may be generated by the target first functional unit and/or generated by the target second functional unit.

Step 1705: The first functional unit sends a handover command to the terminal device based on the handover response; and correspondingly, the terminal device receives the handover command from the first functional unit.

The handover command includes the configuration information of the target second functional unit.

If the target network side can accept the terminal device, the first functional unit may send the handover command to the terminal device. After receiving the handover command, the terminal device disconnects from the first functional unit and attempts to access the target first functional unit.

Optionally, the first functional unit and the second functional unit may further forward, to the target first functional unit and the target second functional unit, a service data cache related to the terminal device, to ensure service continuity.

For example, the first functional unit may send the configuration information of the target second functional unit to the second functional unit, and the second functional unit may send the service data of the terminal device to the target second functional unit based on the configuration information of the target second functional unit. Alternatively, the second functional unit may send the service data of the terminal device to the first functional unit, the first functional unit sends the service data of the terminal device to the target first functional unit, and then, the target first functional unit sends the service data of the terminal device to the target second functional unit.

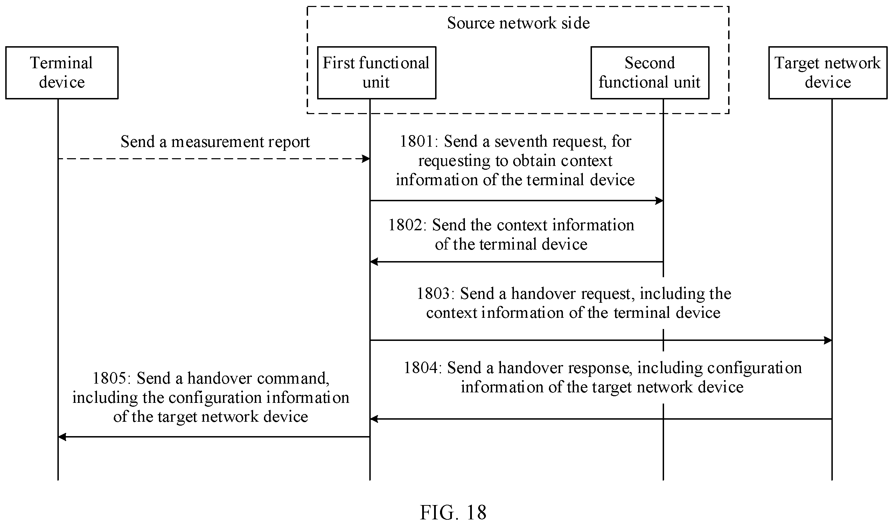

Different from a case in which the target network side includes the target first functional unit and the target second functional unit in FIG. 17, as shown in FIG. 18, a target network side may include a target network device.

FIG. 18 is a diagram of a communication method according to an embodiment of this application. The method may be applied to a communication scenario in which a terminal device in a connected state performs cell handover. In the communication scenario, a source network side corresponding to the terminal device may include a first functional unit and a second functional unit, and a target network side corresponding to the terminal device may include a target network device. As shown in FIG. 18, the method may include the following steps.

Step 1801: The first functional unit sends a seventh request to the second functional unit; and correspondingly, the second functional unit receives the seventh request from the first functional unit.

The seventh request is for requesting to obtain context information of the terminal device, and the seventh request includes identification information of the terminal device.

Optionally, the terminal device may send a measurement report to the first functional unit. When the first functional unit determines, based on the measurement report, that the terminal device needs to be handed over to the target network side, the first functional unit may send the seventh request to the second functional unit.

Step 1802: The second functional unit sends the context information of the terminal device to the first functional unit; and correspondingly, the first functional unit receives the context information of the terminal device from the second functional unit.

Because the source network side uses a modular design for the first functional unit and the second functional unit, the terminal device is no longer served by one source node, and may be served by a plurality of functional nodes on the source network side. Before the source network side sends a handover request to the target network device, the first functional unit and the second functional unit on the source network side may migrate context of the terminal device, to first transfer context of the terminal device maintained by each second functional unit to the first functional unit, and then transfer the context from the first functional node to the target network device. A root cause is as follows: It is assumed that there is no direct connection between the second functional unit and the target network device and that the handover request/decision-making is uniformly performed by the first functional unit and the target network device, additional synchronization required under decision-making and execution of a plurality of functional units can be avoided.

Step 1803: The first functional unit sends the handover request to the target network device; and correspondingly, the target network device receives the handover request from the first functional unit.

The handover request includes the context information of the terminal device. The context information of the terminal device may include context information of the terminal device in the first functional unit and context information of the terminal device in the second functional unit.

Step 1804: The target network device sends a handover response to the first functional unit; and correspondingly, the first functional unit receives the handover response from the target network device.

The handover response includes configuration information of the target network device.

After receiving the handover request, the target network device may determine, based on the context information of the terminal device, to accept or reject the handover request of the terminal device. After the target network device accepts the terminal device, the target network device may include the configuration information of the target network device in the handover response, and deliver the handover response to the terminal device via the first functional unit.

Step 1805: The first functional unit sends a handover command to the terminal device based on the handover response; and correspondingly, the terminal device receives the handover command from the first functional unit.

The handover command includes the configuration information of the target network device.

If the target network device can accept the terminal device, the first functional unit may send the handover command to the terminal device. After receiving the handover command, the terminal device disconnects from the first functional unit and attempts to access the target network device.

Optionally, the first functional unit and the second functional unit may further forward, to the target network device, a service data cache related to the terminal device, to ensure service continuity.

For example, the first functional unit may send the configuration information of the target network device to the second functional unit, and the second functional unit may send the service data of the terminal device to the target network device based on the configuration information of the target network device. Alternatively, the second functional unit may send the service data of the terminal device to the first functional unit, and the first functional unit sends the service data of the terminal device to the target network device.

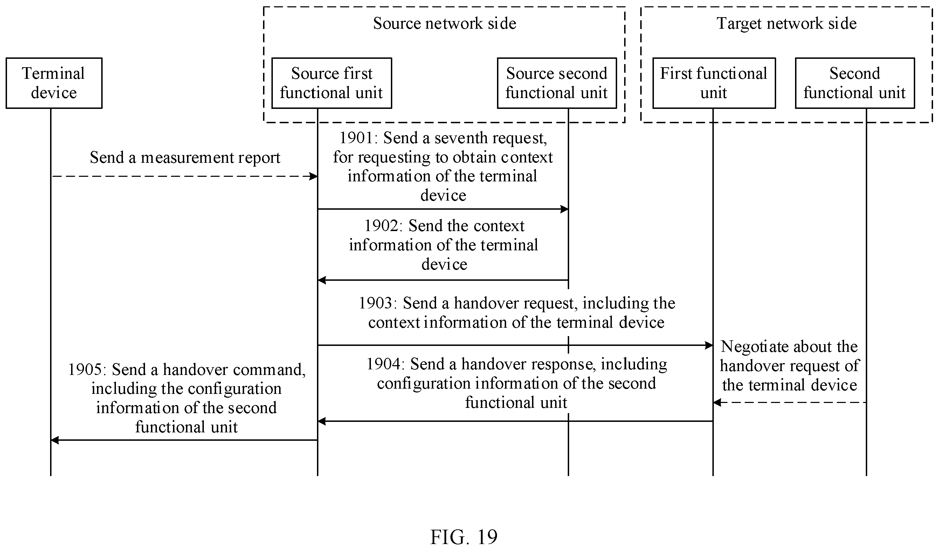

Different from a case in which the source network side includes the first functional unit and the second functional unit in FIG. 17 or FIG. 18, as shown in FIG. 19, a first functional unit and a second functional unit may be used as a target network side.

FIG. 19 is a diagram of a communication method according to an embodiment of this application. The method may be applied to a communication scenario in which a terminal device in a connected state performs cell handover. In the communication scenario, a source network side corresponding to the terminal device may include a source first functional unit and a source second functional unit, and a target network side corresponding to the terminal device may include a first functional unit and a second functional unit. As shown in FIG. 19, the method may include the following steps.

Step 1901: The source first functional unit sends a seventh request to the source second functional unit; and correspondingly, the source second functional unit receives the seventh request from the source first functional unit.

The seventh request is for requesting to obtain context information of the terminal device, and the seventh request includes identification information of the terminal device.

Optionally, the terminal device may send a measurement report to the source first functional unit. When the source first functional unit determines, based on the measurement report, that the terminal device needs to be handed over to the target network side, the source first functional unit may send the seventh request to the source second functional unit.

Step 1902: The source second functional unit sends the context information of the terminal device to the source first functional unit; and correspondingly, the source first functional unit receives the context information of the terminal device from the source second functional unit.

Because the source network side uses a modular design for the first functional unit and the second functional unit, the terminal device is no longer served by one source node, and may be served by a plurality of functional nodes on the source network side. Before the source network side sends a handover request to the target network side, the source first functional unit and the source second functional unit on the source network side may migrate context of the terminal device, to first transfer context of the terminal device maintained by each source second functional unit to the source first functional unit, and then transfer the context from the source first functional node to the first functional unit or the second functional unit. A root cause is as follows: It is assumed that there is no direct connection between the source second functional unit and the first functional unit or the second functional unit and that the handover request/decision-making is uniformly performed by the source first functional unit and the first functional unit, additional synchronization required under decision-making and execution of a plurality of functional units can be avoided.

Step 1903: The source first functional unit sends the handover request to the first functional unit; and correspondingly, the first functional unit receives the handover request from the source first functional unit.

The handover request includes the context information of the terminal device. The context information of the terminal device may include context information of the terminal device in the source first functional unit and context information of the terminal device in the source second functional unit.

Step 1904: The first functional unit sends a handover response to the source first functional unit; and correspondingly, the source first functional unit receives the handover response from the first functional unit.

The handover response includes configuration information of the second functional unit.

After receiving the handover request, the first functional unit may forward the context information of the terminal device to the second functional unit, and the first functional unit and the second functional unit may negotiate about the handover request of the terminal device (for example, accept or reject the handover request of the terminal device). After the first functional unit accepts the terminal device, the first functional unit may include the configuration information of the second functional unit in the handover response, and deliver the handover response to the terminal device via the source first functional unit. The configuration information of the second functional unit may be generated by the first functional unit and/or generated by the second functional unit.

Step 1905: The source first functional unit sends a handover command to the terminal device based on the handover response; and correspondingly, the terminal device receives the handover command from the source first functional unit.

The handover command includes the configuration information of the second functional unit.

If the target network side can accept the terminal device, the source first functional unit may send the handover command to the terminal device. After receiving the handover command, the terminal device disconnects from the source first functional unit and attempts to access the first functional unit.

Optionally, the source first functional unit and the source second functional unit may further forward, to the first functional unit and the second functional unit, a service data cache related to the terminal device, to ensure service continuity.

For example, the source first functional unit may send the configuration information of the second functional unit to the source second functional unit, and the source second functional unit may send the service data of the terminal device to the second functional unit based on the configuration information of the second functional unit. Alternatively, the source second functional unit may send the service data of the terminal device to the source first functional unit, the source first functional unit sends the service data of the terminal device to the first functional unit, and then, the first functional unit sends the service data of the terminal device to the second functional unit.

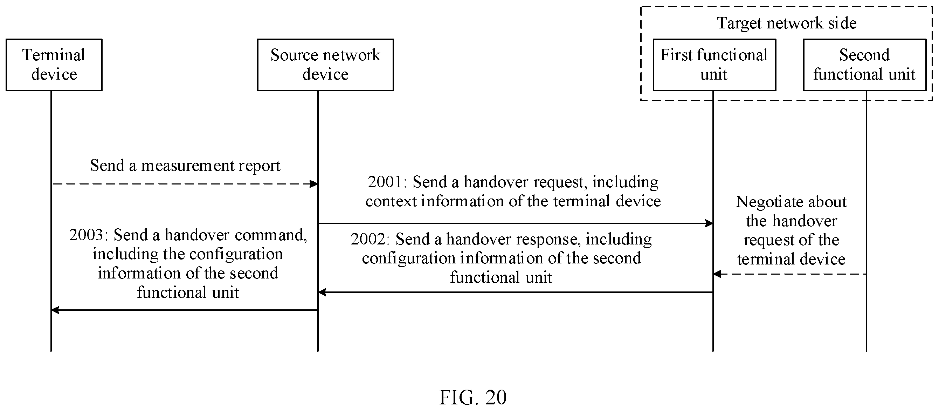

Different from a case in which the source network side includes the source first functional unit and the source second functional unit in FIG. 19, as shown in FIG. 20, a source network side may include a source network device.

FIG. 20 is a diagram of a communication method according to an embodiment of this application. The method may be applied to a communication scenario in which a terminal device in a connected state performs cell handover. In the communication scenario, a source network side corresponding to the terminal device may include a source network device, and a target network side corresponding to the terminal device may include a first functional unit and a second functional unit. As shown in FIG. 20, the method may include the following steps.

Step 2001: The source network device sends a handover request to the first functional unit; and correspondingly, the first functional unit receives the handover request from the source network device.

The handover request includes context information of the terminal device.

Optionally, the terminal device may send a measurement report to the source network device. When the source network device determines, based on the measurement report, that the terminal device needs to be handed over to the target network side, the source network device may send the handover request to the first functional unit.

Step 2002: The first functional unit sends a handover response to the source network device; and correspondingly, the source network device receives the handover response from the first functional unit.

The handover response includes configuration information of the second functional unit.

After receiving the handover request, the first functional unit may forward the context information of the terminal device to the second functional unit, and the first functional unit and the second functional unit may negotiate about the handover request of the terminal device (for example, accept or reject the handover request of the terminal device). After the first functional unit accepts the terminal device, the first functional unit may include the configuration information of the second functional unit in the handover response, and deliver the handover response to the terminal device via the source network device. The configuration information of the second functional unit may be generated by the first functional unit and/or generated by the second functional unit.

Step 2003: The source network device sends a handover command to the terminal device based on the handover response; and correspondingly, the terminal device receives the handover command from the source network device.

The handover command includes the configuration information of the second functional unit.

If the target network side can accept the terminal device, the source network device may send the handover command to the terminal device. After receiving the handover command, the terminal device disconnects from the source network device and attempts to access the first functional unit.

Optionally, the source network device may further forward, to the first functional unit and the second functional unit, a service data cache related to the terminal device, to ensure service continuity.

For example, the source network device may send the service data of the terminal device to the second functional unit based on the configuration information of the second functional unit. Alternatively, the source network device may send the service data of the terminal device to the first functional unit, and the first functional unit sends the service data of the terminal device to the second functional unit.

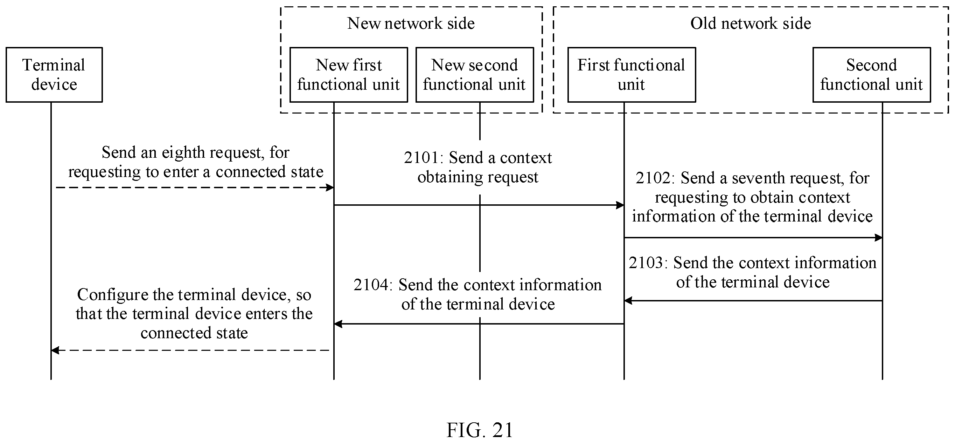

Different from a case in which the communication scenario in which the terminal device in the connected state performs cell handover is used as an example in FIG. 17 to FIG. 20 to describe the context migration procedure of the terminal device, as shown in FIG. 21, a communication scenario in which a terminal device in an inactive (inactive) state enters a connected state may be used as an example to describe a context migration procedure of the terminal device.

FIG. 21 is a diagram of a communication method according to an embodiment of this application. The method may be applied to a communication scenario in which a terminal device in an inactive state enters a connected state. In the communication scenario, an old network side corresponding to the terminal device may include a first functional unit and a second functional unit, and a new network side corresponding to the terminal device may include a new first functional unit and a new second functional unit. As shown in FIG. 21, the method may include the following steps.

Step 2101: The new first functional unit sends a context obtaining request to the first functional unit; and correspondingly, the first functional unit receives the context obtaining request from the new first functional unit.

The context obtaining request includes identification information of the terminal device.

After the terminal device in the inactive state enters the inactive state from the previous connected state, the terminal device may continue to store context information of the terminal device, and the old network side also stores the context information of the terminal device, so that when the terminal device moves to the new network side and attempts to enter the connected state, the new network side can request the context information of the terminal device from the old network side, thereby reducing operations such as re-authentication and key update that are required for the terminal device to enter the connected state from an idle (idle) state. In this way, the terminal device in the inactive state enters the connected state with a lower latency than the terminal device in the idle state, and less signaling brings lower power consumption.

Optionally, the terminal device may send an eighth request to the new first functional unit, where the eighth request is for requesting to enter the connected state; and the new first functional unit may send the context obtaining request to the first functional unit based on the eighth request.

Step 2102: The first functional unit sends a seventh request to the second functional unit; and correspondingly, the second functional unit receives the seventh request from the first functional unit.

The seventh request is for requesting to obtain the context information of the terminal device, and the seventh request includes the identification information of the terminal device.

Step 2103: The second functional unit sends the context information of the terminal device to the first functional unit; and correspondingly, the first functional unit receives the context information of the terminal device from the second functional unit.

Step 2104: The first functional unit sends the context information of the terminal device to the new first functional unit; and correspondingly, the new first functional unit receives the context information of the terminal device from the first functional unit.

The context information of the terminal device includes context information of the terminal device in the first functional unit and context information of the terminal device in the second functional unit.

After successfully obtaining the context information of the terminal device from the first functional unit, the new first functional unit may configure the terminal device based on the context information of the terminal device, so that the terminal device enters the connected state.

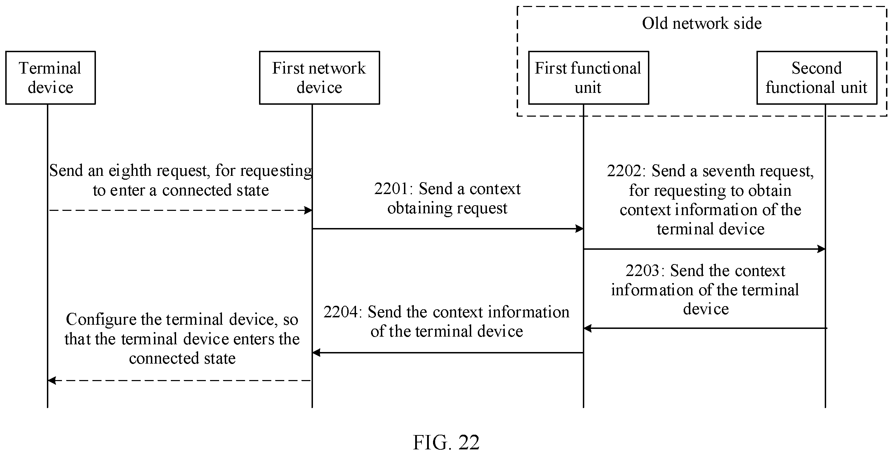

Different from a case in which the new network side includes the new first functional unit and the new second functional unit in FIG. 21, as shown in FIG. 22, a new network side may include a first network device (or may be described as a new network device).

FIG. 22 is a diagram of a communication method according to an embodiment of this application. The method may be applied to a communication scenario in which a terminal device in an inactive state enters a connected state. In the communication scenario, an old network side corresponding to the terminal device may include a first functional unit and a second functional unit, and a new network side corresponding to the terminal device may include a first network device. As shown in FIG. 22, the method may include the following steps.

Step 2201: The first network device sends a context obtaining request to the first functional unit; and correspondingly, the first functional unit receives the context obtaining request from the first network device.

The context obtaining request includes identification information of the terminal device.

Optionally, the terminal device may send an eighth request to the first network device, where the eighth request is for requesting to enter the connected state; and the first network device may send the context obtaining request to the first functional unit based on the eighth request.

Step 2202: The first functional unit sends a seventh request to the second functional unit; and correspondingly, the second functional unit receives the seventh request from the first functional unit.

The seventh request is for requesting to obtain context information of the terminal device, and the seventh request includes the identification information of the terminal device.

Step 2203: The second functional unit sends the context information of the terminal device to the first functional unit; and correspondingly, the first functional unit receives the context information of the terminal device from the second functional unit.

Step 2204: The first functional unit sends the context information of the terminal device to the first network device; and correspondingly, the first network device receives the context information of the terminal device from the first functional unit.

The context information of the terminal device includes context information of the terminal device in the first functional unit and context information of the terminal device in the second functional unit.

After successfully obtaining the context information of the terminal device from the first functional unit, the first network device may configure the terminal device based on the context information of the terminal device, so that the terminal device enters the connected state.

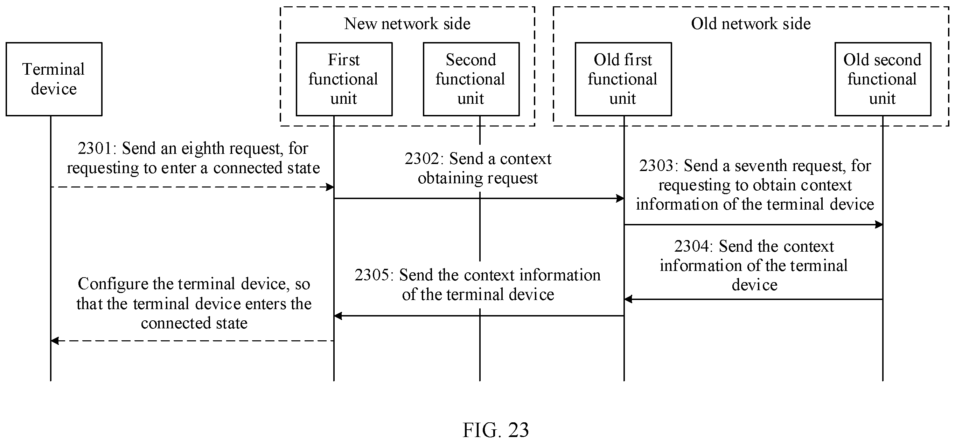

Different from a case in which the old network side includes the first functional unit and the second functional unit in FIG. 21 or FIG. 22, as shown in FIG. 23, a first functional unit and a second functional unit may also be used as a new network side.

FIG. 23 is a diagram of a communication method according to an embodiment of this application. The method may be applied to a communication scenario in which a terminal device in an inactive state enters a connected state. In the communication scenario, an old network side corresponding to the terminal device may include an old first functional unit and an old second functional unit, and a new network side corresponding to the terminal device may include a first functional unit and a second functional unit. As shown in FIG. 23, the method may include the following steps.

Step 2301: The terminal device sends an eighth request to the first functional unit; and correspondingly, the first functional unit receives the eighth request from the terminal device.

The eighth request is for requesting to enter the connected state.

Step 2302: The first functional unit sends a context obtaining request to the old first functional unit; and correspondingly, the old first functional unit receives the context obtaining request from the first functional unit.

The context obtaining request includes identification information of the terminal device.

Step 2303: The old first functional unit sends a seventh request to the old second functional unit; and correspondingly, the old second functional unit receives the seventh request from the old first functional unit.

The seventh request is for requesting to obtain context information of the terminal device, and the seventh request includes the identification information of the terminal device.

Step 2304: The old second functional unit sends the context information of the terminal device to the old first functional unit; and correspondingly, the old first functional unit receives the context information of the terminal device from the old second functional unit.

Step 2305: The old first functional unit sends the context information of the terminal device to the first functional unit; and correspondingly, the first functional unit receives the context information of the terminal device from the old first functional unit.

The context information of the terminal device includes context information of the terminal device in the old first functional unit and context information of the terminal device in the old second functional unit.

After successfully obtaining the context information of the terminal device from the old first functional unit, the first functional unit may configure the terminal device based on the context information of the terminal device, so that the terminal device enters the connected state.

Optionally, the first functional unit may further send the context information of the terminal device in the old second functional unit to the second functional unit.

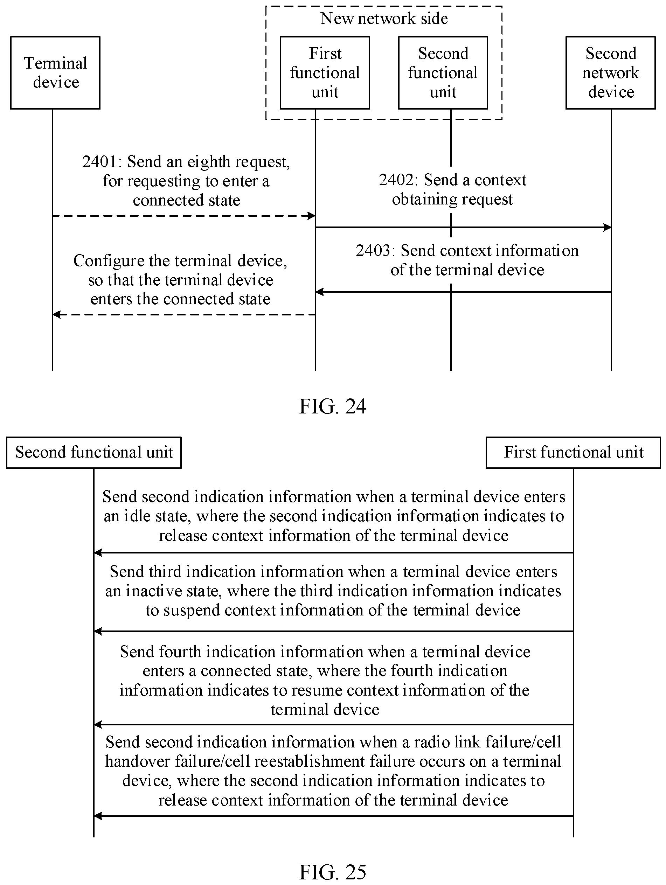

Different from a case in which the old network side includes the old first functional unit and the old second functional unit in FIG. 23, as shown in FIG. 24, an old network side may include a second network device (or may be described as an old network device).

FIG. 24 is a diagram of a communication method according to an embodiment of this application. The method may be applied to a communication scenario in which a terminal device in an inactive state enters a connected state. In the communication scenario, an old network side corresponding to the terminal device may include a second network device, and a new network side corresponding to the terminal device may include a first functional unit and a second functional unit. As shown in FIG. 23, the method may include the following steps.

Step 2401: The terminal device sends an eighth request to the first functional unit; and correspondingly, the first functional unit receives the eighth request from the terminal device.

The eighth request is for requesting to enter the connected state.

Step 2402: The first functional unit sends a context obtaining request to the second network device; and correspondingly, the second network device receives the context obtaining request from the first functional unit.

The context obtaining request includes identification information of the terminal device.

Step 2403: The second network device sends context information of the terminal device to the first functional unit; and correspondingly, the first functional unit receives the context information of the terminal device from the second network device.

After successfully obtaining the context information of the terminal device from the second network device, the first functional unit may configure the terminal device based on the context information of the terminal device, so that the terminal device enters the connected state.

Optionally, the first functional unit may further send context information of the terminal device in the second network device to the second functional unit.

Based on the foregoing descriptions, in embodiments of this application, a decoupling design is used for the first functional unit and the second functional unit. When a connection status of the terminal device changes, the first functional unit and the second functional unit need to be updated synchronously.

For example, as shown in FIG. 25, the first functional unit may send second indication information to the second functional unit when the terminal device enters the idle state, where the second indication information indicates to release the context information of the terminal device; or the first functional unit may send third indication information to the second functional unit when the terminal device enters the inactive state, where the third indication information indicates to suspend the context information of the terminal device; or the first functional unit may send fourth indication information to the second functional unit when the terminal device enters the connected state, where the fourth indication information indicates to resume the context information of the terminal device; or the first functional unit may send second indication information to the second functional unit when a radio link failure/cell handover failure/cell reestablishment failure occurs on the terminal device, where the second indication information indicates to release the context information of the terminal device.

It should be noted that the foregoing description is provided by using an example in which the network device is split into the first functional unit and the one or more second functional units. It may be understood that a core network device may also be split into a third functional unit and one or more fourth functional units. The plurality of fourth functional units can more flexibly support various types of services, thereby improving communication performance.

For descriptions of the third functional unit and the fourth functional unit, refer to the foregoing descriptions of the first functional unit and the second functional unit. A specific difference lies in that, the air interface information may be replaced with NAS information, and the inter-station interface information may be replaced with Ng information, to be applicable to a core network side.

It should be noted that embodiments of this application may be implemented separately, or may be implemented in combination. This is not limited. Unless otherwise specified or there is a logic conflict, terms and/or descriptions in different embodiments provided in this application are consistent and may be mutually referenced, and technical features in different embodiments may be combined based on an internal logic relationship thereof, to form a new embodiment.

It may be understood that in embodiments of this application, an execution body may perform a part or all of the steps in embodiments of this application. These steps or operations are merely examples. In embodiments of this application, other operations or variations of various operations may further be performed. In addition, the steps may be performed in a sequence different from a sequence presented in embodiments of this application, and not all operations in embodiments of this application may be necessarily performed.

The solutions provided in embodiments of this application are mainly described above from the perspective of interaction between devices. It may be understood that, to implement the foregoing functions, each device includes a corresponding hardware structure and/or corresponding software module for performing the functions. A person skilled in the art should easily be aware that, in combination with algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is merely logic function division. In actual implementation, there may be another division manner.

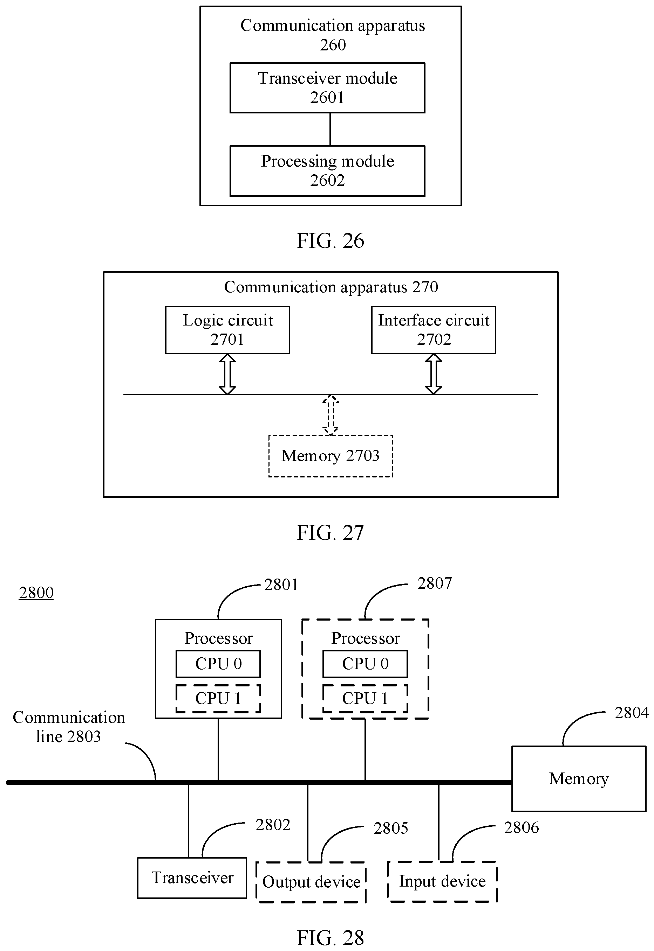

When each functional module is obtained through division based on each corresponding function, FIG. 26 shows a communication apparatus 260. The communication apparatus 260 may perform actions performed by the first functional unit in the methods shown in FIG. 6 to FIG. 25, or perform actions performed by the second functional unit in the methods shown in FIG. 6 to FIG. 25, or perform actions performed by the terminal device in the methods shown in FIG. 6 to FIG. 25. All related content of the steps in the foregoing method embodiments may be cited in function descriptions of corresponding functional modules. For technical effect that can be achieved, refer to the foregoing method embodiments. Details are not described herein again.

The communication apparatus 260 may include a transceiver module 2601 and a processing module 2602. For example, the communication apparatus 260 may be a communication device, or may be a chip used in a communication device, or another combined device or component that has functions of the communication apparatus. When the communication apparatus 260 is a communication device, the transceiver module 2601 may be a transceiver, where the transceiver may include an antenna, a radio frequency circuit, and the like; and the processing module 2602 may be a processor (or a processing circuit), for example, a baseband processor, where the baseband processor may include one or more CPUs. When the communication apparatus 260 is a component that has functions of the communication apparatus, the transceiver module 2601 may be a radio frequency unit, and the processing module 2602 may be a processor (or a processing circuit), for example, a baseband processor. When the communication apparatus 260 is a chip system, the transceiver module 2601 may be an input/output interface of a chip (for example, a baseband chip), and the processing module 2602 may be a processor (or a processing circuit) of the chip system, and may include one or more central processing units. It should be understood that the transceiver module 2601 in this embodiment of this application may be implemented by a transceiver or a transceiver-related circuit component, and the processing module 2602 may be implemented by a processor or a processor-related circuit component (or referred to as a processing circuit).

For example, the transceiver module 2601 may be configured to perform all sending and receiving operations performed by the communication apparatus in the embodiments shown in FIG. 6 to FIG. 25, and/or configured to support another process of the technology described in this specification. The processing module 2602 may be configured to perform all operations performed by the communication apparatus in the embodiments shown in FIG. 6 to FIG. 25 except the sending and receiving operations, and/or configured to support another process of the technology described in this specification.

In another possible implementation, the transceiver module 2601 in FIG. 26 may be replaced with a transceiver, and functions of the transceiver module 2601 may be integrated into the transceiver; and the processing module 2602 may be replaced with a processor, and functions of the processing module 2602 may be integrated into the processor. Further, the communication apparatus 260 shown in FIG. 26 may further include a memory.

Alternatively, when the processing module 2602 is replaced with a processor, and the transceiver module 2601 is replaced with a transceiver, the communication apparatus 260 in this embodiment of this application may alternatively be a communication apparatus 270 shown in FIG. 27.

The processor may be a logic circuit 2701, and the transceiver may be an interface circuit 2702. Further, the communication apparatus 270 shown in FIG. 27 may further include a memory 2703.

An embodiment of this application further provides a communication apparatus 2800 shown in FIG. 28. The communication apparatus 2800 may be a terminal device or a chip or system on chip in a terminal device, or may be a network device or a chip or system on chip in a network device. As shown in FIG. 28, the communication apparatus 2800 includes a processor 2801, a transceiver 2802, and a communication line 2803.

Further, the communication apparatus 2800 may further include a memory 2804. The processor 2801, the memory 2804, and the transceiver 2802 may be connected to each other through the communication line 2803.

The processor 2801 is a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 2801 may alternatively be another apparatus having a processing function, for example, a circuit, a device, or a software module. This is not limited.

The transceiver 2802 is configured to communicate with another device or another communication network. The another communication network may be an ethernet, a radio access network (radio access network, RAN), a wireless local area network (wireless local area network, WLAN), or the like. The transceiver 2802 may be a module, a circuit, a transceiver, or any apparatus that can implement communication.

The communication line 2803 is configured to transmit information between components included in the communication apparatus 2800.

The memory 2804 is configured to store instructions. The instructions may be a computer program.

The memory 2804 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium, another magnetic storage device, or the like. This is not limited.

It should be noted that the memory 2804 may exist independently of the processor 2801, or may be integrated with the processor 2801. The memory 2804 may be configured to store instructions, program code, some data, or the like. The memory 2804 may be located inside the communication apparatus 2800, or may be located outside the communication apparatus 2800. This is not limited. The processor 2801 is configured to execute the instructions stored in the memory 2804, to implement the methods provided in the following embodiments of this application.

In an example, the processor 2801 may include one or more CPUs, for example, a CPU 0 and a CPU 1 in FIG. 28.

In an optional implementation, the communication apparatus 2800 includes a plurality of processors. For example, in addition to the processor 2801 in FIG. 28, the communication apparatus 2800 may further include a processor 2807.

In an optional implementation, the communication apparatus 2800 further includes an output device 2805 and an input device 2806. For example, the input device 2806 is a device, for example, a keyboard, a mouse, a microphone, or a joystick, and the output device 2805 is a device, for example, a display or a speaker (speaker).

It should be noted that the communication apparatus 2800 may be a desktop computer, a portable computer, a network server, a mobile phone, a tablet computer, a wireless terminal, an embedded device, a chip system, or a device having a structure similar to that in FIG. 28. In addition, the composition structure shown in FIG. 28 does not constitute a limitation on the communication apparatus. In addition to the components shown in FIG. 28, the communication apparatus may include more or fewer components than those shown in the figure, or combine some components, or have different component arrangements.

In embodiments of this application, the chip system may include a chip, or may include a chip and another discrete device.

An embodiment of this application further provides a computer program product. When the computer program product is executed by a computer, functions of any one of the foregoing method embodiments may be implemented.

An embodiment of this application further provides a computer program. When the computer program is executed by a computer, functions of any one of the foregoing method embodiments may be implemented.

An embodiment of this application further provides a computer-readable storage medium. All or a part of procedures in the foregoing method embodiments may be implemented by a computer program instructing related hardware. The program may be stored in the foregoing computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The foregoing computer-readable storage medium may alternatively be an external storage device of the foregoing terminal, for example, a plug-in hard disk, a smart media card (smart media card, SMC), a secure digital (secure digital, SD) card, and a flash card (flash card) that are provided on the foregoing terminal. Further, the computer-readable storage medium may further include both the internal storage unit and the external storage device of the foregoing terminal. The computer-readable storage medium is configured to store the computer program and other programs and data that are required by the foregoing terminal. The computer-readable storage medium may further be configured to temporarily store data that has been output or is to be output.

It should be noted that terms "first", "second", and the like in the specification, the claims, and the accompanying drawings of this application are used to distinguish between different objects but do not indicate a particular order. "First" and "second" are merely intended for description, and shall not be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one piece (item)" means one or more, "a plurality of" means two or more, "at least two pieces (items)" means two or three or more, and "and/or" is used to describe an association relationship between associated objects, and indicates that three relationships may exist. For example, "A and/or B" may indicate three cases: Only A exists, only B exists, and both A and B exist, where A and B may be singular or plural. The character "/" generally indicates an "or" relationship between associated objects. "At least one of the following items (pieces)" or a similar expression thereof indicates any combination of these items, including a singular item (piece) or any combination of plural items (pieces). For example, at least one item (piece) of a, b, or c may indicate a, b, c, "a and b", "a and c", "b and c", or "a, b, and c", where a, b, and c may be singular or plural. Both "when..." and "if" mean that corresponding processing is performed in an objective situation, are not intended to limit time, do not require a determining action during implementation, and do not mean any other limitation.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example" or "for example" is intended to present a related concept in a specific manner for ease of understanding.

In this application, "sending information to... (a terminal device)" may be understood as that a destination of the information is the terminal device, and may include directly or indirectly sending the information to the terminal device. "Receiving information from... (a terminal device)" may be understood as that a source of the information is the terminal device, and may include directly or indirectly receiving the information from the terminal device. The information may undergo necessary processing, for example, a format change, between the source and the destination for information sending. However, the destination may understand valid information from the source.

The foregoing descriptions about implementations allow a person skilled in the art to clearly understand that, for the purpose of convenient and brief description, division into the foregoing functional modules is merely used as an example for description. In actual application, the foregoing functions may be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in another manner. For example, the described apparatus embodiments are merely examples. For example, division into the modules or units is merely logic function division. There may be other division during actual implementation. For example, a plurality of units or components may be combined or integrated into another apparatus, or some features may be ignored or not be performed. In addition, the displayed or discussed mutual couplings or direct couplings or communication connections may be implemented through using some interfaces. The indirect couplings or communication connections between the apparatuses or units may be implemented in an electrical form, in a mechanical form, or in another form.

The units described as separate components may or may not be physically separate, and components displayed as units may be one or more physical units, may be located at one place, or may be distributed on different places. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such understanding, the technical solutions of embodiments of this application essentially or all or a part of the technical solutions may be implemented in a form of a software product. The software product is stored in a storage medium and includes several instructions for instructing a device (which may be a single-chip microcomputer, a chip, or the like) or a processor (processor) to perform all or a part of the steps of the methods described in embodiments of this application. The foregoing storage medium includes any medium that can store program code, for example, a USB flash drive, a removable hard disk, a ROM, a RAM, a magnetic disk, or an optical disc.

## Claims

1. A communication method, wherein the method is applied to a first functional unit on a network side, and the method comprises:
obtaining configuration information of a plurality of second functional units on the network side, wherein the first functional unit is configured to provide a connection interface for communicating with a terminal device, and the second functional unit is configured to provide a function or information associated with a transceiver function of the connection interface; and
establishing a communication connection to the terminal device based on the configuration information of the plurality of second functional units.

2. The method according to claim 1, wherein
the second functional unit is configured to provide one or more of the following functions: a computing function, a data function, an intelligence function, a sensing function, a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

3. A communication method, wherein the method is applied to a first functional unit on a network side, and the method comprises:
obtaining configuration information of one or more second functional units on the network side, wherein the first functional unit is configured to provide a connection function, the second functional unit is configured to provide a first service function, and the first service function comprises one or more of the following: a computing function, a data function, an intelligence function, or a sensing function; and
sending the configuration information of the second functional unit to a terminal device.

4. The method according to claim 3, wherein
the second functional unit is further configured to provide one or more of the following functions: a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

5. The method according to any one of claims 1 to 4, wherein obtaining the configuration information of the second functional unit comprises:
receiving first air interface information from the second functional unit, wherein the first air interface information comprises the configuration information of the second functional unit.

6. The method according to claim 5, wherein the method further comprises:
sending the first air interface information to the terminal device.

7. The method according to claim 5 or 6, wherein the method further comprises:
receiving first information from the terminal device, wherein the first information comprises first indication information and second air interface information, and the first indication information indicates the first functional unit to send the second air interface information to the second functional unit; and
sending the second air interface information to the second functional unit based on the first indication information.

8. The method according to claim 7, wherein
the first indication information comprises one or more of the following: type/capability identification information of the second functional unit, identification information of the second functional unit, identification information of the terminal device, and task identification information.

9. The method according to any one of claims 1 to 4, wherein obtaining the configuration information of the second functional unit comprises:
receiving first inter-station interface information from the second functional unit, wherein the first inter-station interface information comprises the configuration information of the second functional unit.

10. The method according to claim 9, wherein the method further comprises:
determining third air interface information based on the first inter-station interface information, wherein the third air interface information comprises the configuration information of the second functional unit; and
sending the third air interface information to the terminal device.

11. The method according to claim 9 or 10, wherein the method further comprises:
receiving fourth air interface information from the terminal device;
encapsulating the fourth air interface information into second inter-station interface information; and
sending the second inter-station interface information to the second functional unit.

12. The method according to claim 11, wherein
the fourth air interface information comprises one or more of the following: type/capability identification information of the second functional unit, identification information of the terminal device, and task identification information.

13. The method according to any one of claims 1 to 12, wherein the method further comprises:
determining, based on one or more of the following, a second functional unit corresponding to the terminal device: the type/capability identification information of the second functional unit, the identification information of the second functional unit, the identification information of the terminal device, and the task identification information.

14. The method according to any one of claims 1 to 13, wherein the method further comprises:
receiving a first request from the second functional unit, wherein the first request is for requesting to establish an air interface bearer between the second functional unit and the terminal device; and
sending the first request to the terminal device.

15. The method according to any one of claims 1 to 14, wherein the method further comprises:
sending a second request to the terminal device, wherein the second request is for requesting to establish an air interface bearer between the first functional unit and the terminal device.

16. The method according to any one of claims 1 to 15, wherein the method further comprises:
receiving a third request from the second functional unit, wherein the third request is for requesting to establish a terrestrial tunnel between the first functional unit and the second functional unit; or
sending a fourth request to the second functional unit, wherein the fourth request is for requesting to establish a terrestrial tunnel between the first functional unit and the second functional unit.

17. The method according to claim 16, wherein
the third request comprises the identification information of the terminal device and/or the task identification information; or
the fourth request comprises the identification information of the terminal device and/or the task identification information.

18. The method according to any one of claims 1 to 17, wherein the method further comprises:
receiving a fifth request from the second functional unit, wherein the fifth request is for requesting to obtain identification information of a functional unit corresponding to the terminal device and/or identification information of a functional unit corresponding to a task, and the fifth request comprises the identification information of the terminal device and/or the task identification information; and
sending a fifth response to the second functional unit, wherein the fifth response comprises the identification information of the functional unit corresponding to the terminal device and/or the identification information of the functional unit corresponding to the task.

19. The method according to any one of claims 1 to 18, wherein the method further comprises:
receiving a sixth request from the second functional unit, wherein the sixth request is for requesting to obtain connection information of the terminal device, and the sixth request comprises the identification information of the terminal device; and
sending a sixth response to the second functional unit, wherein the sixth response comprises the connection information of the terminal device.

20. The method according to any one of claims 1 to 19, wherein the method further comprises:
when the terminal device enters an idle state, sending second indication information to the second functional unit, wherein the second indication information indicates to release context information of the terminal device; or
when the terminal device enters an inactive state, sending third indication information to the second functional unit, wherein the third indication information indicates to suspend context information of the terminal device; or
when the terminal device enters a connected state, sending fourth indication information to the second functional unit, wherein the fourth indication information indicates to resume context information of the terminal device; or
when a radio link failure/cell handover failure/cell reestablishment failure occurs on the terminal device, sending second indication information to the second functional unit, wherein the second indication information indicates to release context information of the terminal device.

21. A communication method, wherein the method is applied to a second functional unit on a network side, and the method comprises:
generating configuration information of the second functional unit; and
sending the configuration information of the second functional unit to a first functional unit on the network side, wherein the first functional unit is configured to provide a connection interface for communicating with a terminal device, and the second functional unit is configured to provide a function or information associated with a transceiver function of the connection interface.

22. The method according to claim 21, wherein
the second functional unit is configured to provide one or more of the following functions: a computing function, a data function, an intelligence function, a sensing function, a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

23. A communication method, wherein the method is applied to a second functional unit on a network side, and the method comprises:
generating configuration information of the second functional unit; and
sending the configuration information of the second functional unit to a first functional unit on the network side, wherein the first functional unit is configured to provide a connection function, the second functional unit is configured to provide a first service function, and the first service function comprises one or more of the following: a computing function, a data function, an intelligence function, or a sensing function.

24. The method according to claim 23, wherein
the second functional unit is further configured to provide one or more of the following functions: a power control function, an interference coordination function, a mobility function, a load balancing function, a slicing function, a beam management function, a bandwidth part BWP function, a discontinuous reception DRX function, a supplementary uplink SUL function, a packet data convergence protocol PDCP separation function, a multi-radio access technology dual connectivity MRDC function, a carrier aggregation CA function, a multiple-input multiple-output MIMO function, a vehicle-to-everything V2X function, a self-organizing network SON function, a minimization of drive tests MDT function, a non-public network NPN function, a non-terrestrial network NTN function, a new radio unlicensed NR-U function, a two-step random access function, an industrial internet of things IIoT function, a power saving function, an integrated access and backhaul IAB function, a dual active protocol stack DAPS function, a conditional handover CHO function, a small data function, a reduced capability function, or a multimedia broadcast multicast service function.

25. The method according to any one of claims 21 to 24, wherein sending the configuration information of the second functional unit to the first functional unit on the network side comprises:
sending first air interface information to the first functional unit, wherein the first air interface information comprises the configuration information of the second functional unit.

26. The method according to claim 25, wherein the method further comprises:
receiving second air interface information from the first functional unit, wherein the second air interface information is air interface information determined by the terminal device.

27. The method according to any one of claims 21 to 24, wherein sending the configuration information of the second functional unit to the first functional unit on the network side comprises:
sending first inter-station interface information to the first functional unit, wherein the first inter-station interface information comprises the configuration information of the second functional unit.

28. The method according to claim 27, wherein the method further comprises:
receiving second inter-station interface information from the first functional unit, wherein the second inter-station interface information is determined based on fourth air interface information of the terminal device.

29. The method according to any one of claims 21 to 28, wherein the method further comprises:
sending a first request to the first functional unit, wherein the first request is for requesting to establish an air interface bearer between the second functional unit and the terminal device.

30. The method according to any one of claims 21 to 29, wherein the method further comprises:
sending a third request to the first functional unit, wherein the third request is for requesting to establish a terrestrial tunnel between the first functional unit and the second functional unit; or
receiving a fourth request from the first functional unit, wherein the fourth request is for requesting to establish a terrestrial tunnel between the first functional unit and the second functional unit.

31. The method according to claim 30, wherein
the third request comprises identification information of the terminal device and/or task identification information; or
the fourth request comprises identification information of the terminal device and/or task identification information.

32. The method according to any one of claims 21 to 31, wherein the method further comprises:
sending a fifth request to the first functional unit, wherein the fifth request is for requesting to obtain identification information of a functional unit corresponding to the terminal device and/or identification information of a functional unit corresponding to a task, and the fifth request comprises the identification information of the terminal device and/or the task identification information; and
receiving a fifth response from the first functional unit, wherein the fifth response comprises the identification information of the functional unit corresponding to the terminal device and/or the identification information of the functional unit corresponding to the task.

33. The method according to claim 32, wherein the method further comprises:
sending, based on the fifth response, a ninth request to the functional unit corresponding to the terminal device and/or the functional unit corresponding to the task, wherein the ninth request is for requesting to obtain function information of the terminal device and/or function information of the task, and the ninth request comprises the identification information of the terminal device and/or the task identification information; and
receiving a ninth response from the functional unit, wherein the ninth response comprises the function information of the terminal device and/or the function information of the task.

34. The method according to any one of claims 21 to 33, wherein the method further comprises:
sending a sixth request to the first functional unit, wherein the sixth request is for requesting to obtain connection information of the terminal device, and the sixth request comprises the identification information of the terminal device; and
receiving a sixth response from the first functional unit, wherein the sixth response comprises the connection information of the terminal device.

35. The method according to any one of claims 21 to 34, wherein the method further comprises:
receiving a seventh request from the first functional unit, wherein the seventh request is for requesting to obtain context information of the terminal device, and the seventh request comprises the identification information of the terminal device; and
sending the context information of the terminal device to the first functional unit.

36. The method according to claim 35, further comprising:
receiving, from the first functional unit, configuration information of a target second functional unit.

37. The method according to any one of claims 21 to 36, further comprising:
when the terminal device enters an idle state, receiving second indication information from the first functional unit, wherein the second indication information indicates to release the context information of the terminal device; or
when the terminal device enters an inactive state, receiving third indication information sent from the first functional unit, wherein the third indication information indicates to suspend the context information of the terminal device; or
when the terminal device enters a connected state, receiving fourth indication information from the first functional unit, wherein the fourth indication information indicates to resume the context information of the terminal device; or
when a radio link failure/cell handover failure/cell reestablishment failure occurs on the terminal device, receiving second indication information from the first functional unit, wherein the second indication information indicates to release the context information of the terminal device.

38. A communication apparatus, comprising an interface circuit and a logic circuit, wherein the interface circuit is configured to input and/or output information; and the logic circuit is configured to: perform the communication method according to any one of claims 1, 2, and 5 to 20, or perform the communication method according to any one of claims 3 to 20, or perform the communication method according to any one of claims 21, 22, and 25 to 37, or perform the communication method according to any one of claims 23 to 37, to perform processing based on the information and/or generate the information.

39. A computer-readable storage medium, wherein the computer-readable storage medium stores computer instructions or a program, and when the computer instructions or the program is run on a computer, the communication method according to any one of claims 1, 2, and 5 to 20 is performed, or the communication method according to any one of claims 3 to 20 is performed, or the communication method according to any one of claims 21, 22, and 25 to 37 is performed, or the communication method according to any one of claims 23 to 37 is performed.

40. A computer program product, wherein the computer program product comprises computer instructions, and when a part or all of the computer instructions are run on a computer, the communication method according to any one of claims 1, 2, and 5 to 20 is performed, or the communication method according to any one of claims 3 to 20 is performed, or the communication method according to any one of claims 21, 22, and 25 to 37 is performed, or the communication method according to any one of claims 23 to 37 is performed.
